(19) Europäisches Patentamt
European Patent Office
Office européen des brevets

(11) **EP 4 712 629 A1**

(12) **EUROPEAN PATENT APPLICATION**
published in accordance with Art. 153(4) EPC

(43) Date of publication:
**18.03.2026 Bulletin 2026/12**

(21) Application number: **23936885.5**

(22) Date of filing: **12.05.2023**

(51) International Patent Classification (IPC):
**H04W 72/0453** $^{(2023.01)}$    **H04B 17/382** $^{(2015.01)}$

(52) Cooperative Patent Classification (CPC):
**H04B 17/382; H04W 72/0446; H04W 72/0453**

(86) International application number:
**PCT/CN2023/094072**

(87) International publication number:
**WO 2024/234195 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **ZHAO, Qun**
**Beijing 100085 (CN)**

(74) Representative: **Dehns Germany Partnerschaft mbB**
**Theresienstraße 6-8**
**80333 München (DE)**

(54) **INFORMATION PROCESSING METHOD AND APPARATUS, AND COMMUNICATION DEVICE, COMMUNICATION SYSTEM AND STORAGE MEDIUM**

(57)    The present disclosure relates to an information processing method and apparatus, and a communication device, a communication system and a storage medium. The method may be executed by a receiver. The method comprises: receiving a first reference signal, wherein at least two resource particles are occupied for transmitting the first reference signal, and the resource particles are distributed on at least two orthogonal frequency division multiplexing (OFDM) symbols; and sending first information, which comprises a normalized correlation coefficient corresponding to at least one time-domain tag (TDT), wherein the TDT is used for indicating the time-domain distance between a pair of resource particles, and the first information is used by a network device to determine a sensing metric, or the first information is used by the network device to determine state information of a downlink channel. The resource overheads for wireless sensing and channel state determination can be effectively reduced.

```
┌─────────────────────────────────────────────┐
│   S3301: a first reference signal is obtained │
└─────────────────────────────────────────────┘
                      │
                      ▼
┌─────────────────────────────────────────────┐
│        S3302: first information is sent       │
└─────────────────────────────────────────────┘
```

FIG. 3c

EP 4 712 629 A1

**Description**

## TECHNICAL FIELD

The present disclo sure relates to the field of communication technology, in particular, to an information processing method and apparatus, a communication device, a communication system, and a storage medium.

## BACKGROUND

Wireless communication technology and wireless sensing technology share a high degree of similarity. Integrated sensing and communication (ISAC) can combine the wireless communication and the wireless sensing, to introduce close cooperation between the two, thereby improving the spectral efficiency and reducing the network deployment cost. In the wireless sensing, it is typically necessary to estimate the distance, the orientation (e.g., horizontal and vertical angles), and velocity of the target. The broader sensing also includes wireless tracking and radio frequency identification (RFID) of the target.

## SUMMARY

Embodiments of the present disclosure provide an information processing method and an information processing apparatus, a communication device, a communication system, and a storage medium.
According to a first aspect of embodiments of the present disclosure, an information processing method is provided. The method is performed by a receiver, and includes:

receiving a first reference signal, wherein the first reference signal is transmitted occupying at least two resource elements, and the resource elements are distributed across at least two Orthogonal Frequency Division Multiplexing (OFDM) symbols;
sending first information, wherein the first information includes a normalized correlation coefficient corresponding to at least one time domain tag (TDT), the TDT is configured to indicate a time domain distance between a pair of resource elements, and the first information is used for a network device to determine a sensing measurement, or the first information is used for the network device to determine downlink channel state information.

According to a second aspect of embodiments of the present disclosure, an information processing method is provided. The method is performed by a network device, and includes:

receiving first information, wherein the first information includes a normalized correlation coefficient corresponding to at least one time domain tag (TDT), the TDT is configured to indicate a time domain distance between a pair of resource elements, a first reference signal is transmitted occupying at least two resource elements, and the resource elements are distributed across at least two Orthogonal Frequency Division Multiplexing (OFDM) symbols;
determining a sensing measurement based on the first information, or determining downlink channel state information based on the first information.

According to a third aspect of embodiments of the present disclosure, an information processing method is provided. The method is applied to a communication system, the communication system including a receiver and a network device, and the method includes:

receiving, by the receiver, a first reference signal, wherein the first reference signal is transmitted occupying at least two resource elements, and the resource elements are distributed across at least two Orthogonal Frequency Division Multiplexing (OFDM) symbols;
sending, by the receiver, wherein the first information includes a normalized correlation coefficient corresponding to at least one time domain tag (TDT), and the TDT is configured to indicate a time domain distance between a pair of resource elements;
determining, by the network device, a sensing measurement based on the first information, or downlink channel state information based on the first information.

According to a fourth aspect of embodiments of the present disclosure, a first information processing apparatus is provided. The apparatus includes:

a receiving module configured to receive a first reference signal, wherein the first reference signal is transmitted occupying at least two resource elements, and the resource elements are distributed across at least two Orthogonal Frequency Division Multiplexing (OFDM) symbols;

a sending module configured to send first information, wherein the first information includes a normalized correlation coefficient corresponding to at least one time domain tag (TDT), the TDT is configured to indicate a time domain distance between a pair of resource elements, and the first information is used for a network device to determine a sensing measurement, or the first information is used for the network device to determine downlink channel state information.

According to a fifth aspect of embodiments of the present disclosure, a second information processing apparatus is provided. The apparatus includes:

a receiving module configured to receive first information, wherein the first information includes a normalized correlation coefficient corresponding to at least one time domain tag (TDT), the TDT is configured to indicate a time domain distance between a pair of resource elements, a first reference signal is transmitted occupying at least two resource elements, and the resource elements are distributed across at least two Orthogonal Frequency Division Multiplexing (OFDM) symbols;

a processing module configured to determine a sensing measurement based on the first information, or determine downlink channel state information based on the first information.

According to a sixth aspect of embodiments of the present disclosure, a communication device is provided, including:

one or more processors;

wherein the one or more processors are configured to call computer instructions to cause the communication device to perform the information processing method described in the first or second aspect of the present disclosure.

According to a seventh aspect of embodiments of the present disclosure, a storage medium is provided. The storage medium stores instructions, which when executed on a communication device, cause the communication device to perform the information processing method described in the first or second aspect of the present disclosure.

The present disclosure can effectively reduce the resource overhead of the wireless sensing and the channel state determination.

## BRIEF DESCRIPTION OF THE DRAWINGS

In order to more clearly illustrate the technical solutions in embodiments of the present disclosure, the drawings required for describing the embodiments are introduced below. These drawings are merely some embodiments of the present disclosure and do not impose specific limitations on the protection scope of the present disclosure.

FIG. 1 is a schematic diagram of an architecture of a communication system according to embodiments of the present disclosure.

FIG. 2a is an interactive schematic diagram of an information processing method according to embodiments of the present disclosure.

FIG. 2b is a schematic diagram of resource occupancy by a first reference signal according to embodiments of the present disclosure.

FIG. 3a is a flowchart of an information processing method according to embodiments of the present disclosure.

FIG. 3b is a flowchart of an information processing method according to embodiments of the present disclosure.

FIG. 3c is a flowchart of an information processing method according to embodiments of the present disclosure.

FIG. 4a is a flowchart of an information processing method according to embodiments of the present disclosure.

FIG. 4b is a flowchart of an information processing method according to embodiments of the present disclosure.

FIG. 4c is a flowchart of an information processing method according to embodiments of the present disclosure.

FIG. 4d is a flowchart of an information processing method according to embodiments of the present disclosure.

FIG. 5 is an interactive schematic diagram of an information processing method according to embodiments of the present disclosure.

FIG. 6 is a flowchart of an information processing method according to embodiments of the present disclosure.

FIG. 7a is a schematic diagram of a structure of a first information processing apparatus according to embodiments of the present disclosure.

FIG. 7b is a schematic diagram of a structure of a second information processing apparatus according to embodiments of the present disclosure.

FIG. 8a is a schematic diagram of a structure of a communication device according to embodiments of the present disclosure.

FIG. 8b is a schematic diagram of a structure of a chip according to embodiments of the present disclosure.

## DETAILED DESCRIPTION

If a receiver directly reports received raw signals of reference signals to the network, the resource overhead of the receiver will be very high, which is detrimental to the wireless sensing and the wireless communication.

Embodiments of the present disclosure provide an information processing method, an information processing apparatus, and a storage medium.

In a first aspect, embodiments of the present disclosure provide an information processing method, and the method is performed by a receiver. The method includes: receiving a first reference signal, the first reference signal being transmitted occupying at least two resource elements, and the resource elements being distributed across at least two Orthogonal Frequency Division Multiplexing (OFDM) symbols; and sending first information, the first information including a normalized correlation coefficient corresponding to at least one time domain tag (TDT), the TDT being configured to indicate a time domain distance between a pair of resource elements, the first information being used for a network device to determine a sensing measurement, or the first information being used for a network device to determine downlink channel state information.

In the above embodiments, by sending the normalized correlation coefficient corresponding to the time domain tag, the receiver can effectively report information for the wireless sensing or for the downlink channel state determination, without sending the raw signal received. This can effectively reduce the occupancy of spectrum resources when the first reference signal is distributed across multiple OFDM symbols, and thus effectively reducing the resource overhead of the wireless sensing and the channel state determination.

In some embodiments of the first aspect, the method includes: determining at least one normalized correlation coefficient sample for a first TDT; and determining the normalized correlation coefficient corresponding to the first TDT based on the at least one normalized correlation coefficient sample.

In the above embodiments, the normalized correlation coefficients corresponding to each TDT can be accurately obtained through the normalized correlation coefficient samples for each TDT, thereby ensuring the accuracy of the wireless sensing and the channel state determination.

In some embodiments of the first aspect, determining the at least one normalized correlation coefficient sample for the first TDT includes: determining a normalized correlation coefficient sample corresponding to a first resource element pair based on channel frequency responses (CFR) of two resource elements in the first resource element pair, the first resource element pair is any resource element pair corresponding to the first TDT.

In the above embodiments, the normalized correlation coefficient sample corresponding to each resource element pair can be accurately obtained based on the channel frequency responses of the two resource elements in each resource element pair corresponding to each TDT, further ensuring the accuracy of the wireless sensing and the channel state determination.

In some embodiments of the first aspect, the resource element pair corresponding to the first TDT includes at least one of the following: the resource element pair consisting of two resource elements distributed across different OFDM symbols; at least two resource element pairs used by different transmit/receive antenna pairs; at least two resource element pairs used by different transmit/receive antenna port pairs; or at least two resource element pairs distributed across different subcarriers.

In the above embodiments, the normalized correlation coefficients for the channel frequency responses of different types of resource element pairs corresponding to the first TDT can be determined and used as the normalized correlation coefficient samples. This ensures the comprehensiveness of the normalized correlation coefficient samples, thereby allowing the normalized correlation coefficient determined based on the normalized correlation coefficient samples to be more accurate, and effectively ensuring the reliability of the wireless sensing and the wireless communication.

In some embodiments of the first aspect, the method includes: determining an update to the normalized correlation coefficient corresponding to a second TDT among the normalized correlation coefficient corresponding to the at least one TDT, and sending second information, the second information including an updated normalized correlation coefficient corresponding to the second TDT.

In the above embodiments, when the normalized correlation coefficient corresponding to any TDT changes, the updated normalized correlation coefficient can be reported promptly. This allows the network device to update the sensing measurement in a timely manner, effectively ensuring the real-time performance and accuracy of the wireless sensing and the channel state determination. In addition, reporting only the updated normalized correlation coefficient further saves the resource overhead.

In some embodiments of the first aspect, the pair of resource elements indicated by the TDT includes resource elements across the same subcarrier.

In the above embodiments, the two resource elements in the resource element pair corresponding to each TDT can be ensured to be distributed on the same subcarrier, which effectively prevents two resource elements across different subcarriers from being included in the corresponding TDT. This ensures that the normalized correlation coefficients corresponding to each TDT are more accurate, guaranteeing the accuracy of the wireless sensing and the channel state determination.

In some embodiments of the first aspect, the at least one TDT includes each TDT in a set of TDTs, and the set of TDTs is determined based on a set of OFDM symbol positions of the resource elements.

In the above embodiments, the set of TDTs can be determined based on the set of OFDM symbol positions of the resource elements, so that the first information includes the normalized correlation coefficient corresponding to each TDT in the set of TDTs. This ensures the integrity of the first information reported by the sensing receiver, thereby further improving the accuracy of the wireless sensing and the channel state determination.

In some embodiments of the first aspect, normalized correlation coefficients corresponding to the at least one TDT are arranged in a specific sequence.

In the above embodiments, arranging the normalized correlation coefficients corresponding to each TDT in the first information in a specific sequence before reporting to the network device can effectively avoid order confusion, which may reduce the accuracy of the wireless sensing and the channel state determination.

In some embodiments of the first aspect, the TDT is determined based on the number of OFDM symbols between a resource element pair.

In the above embodiments, determining the TDT based on the number of OFDM symbols between resource elements allows the TDT to effectively and conveniently indicate the time domain distance between the resource element pair.

In some embodiments of the first aspect, the network device includes at least one of the following: a Location Management Function (LMF) network element, a Sensing Management Function (SMF) network element, or a base station.

In the above embodiments, by sending the first information to the LMF network element, the SMF network element, or the base station, the LMF network element and/or the SMF network element can determine the sensing measurement based on the first information, and the base station can also determine the downlink channel state information based on the first information.

In some embodiments of the first aspect, the first reference signal is a Channel State Information Reference Signal (CSI-RS), and the first information is Channel State Information (CSI); or the first reference signal is a Tracking Reference Signal (TRS), such as the CSI-RS for tracking in the 3GPP protocol, and the first information is Time Domain Channel Properties (TDCP); or the first reference signal is a sensing reference signal, and the first information is sensing information.

In the above embodiments, the receiver can receive the CSI-RS or the TRS, and obtain CSI based on the CSI-RS, or obtain TDCP based on the TRS, and send it to the network device. This allows the network device to determine the downlink channel state information based on the CSI or the TDCP. The receiver can also receive the sensing reference signal, obtain sensing information based on the sensing reference signal, and send it to the network device, so that the network device can determine the sensing measurement based on the sensing information.

In a second aspect, embodiments of the present disclosure provide a wireless sensing method, and the method is performed by a network device. The method includes: receiving first information, the first information including a normalized correlation coefficient corresponding to at least one time domain tag (TDT), the TDT being configured to indicate a time domain distance between a pair of resource elements, a first reference signal being transmitted occupying at least two resource elements, and the resource elements being distributed across at least two Orthogonal Frequency Division Multiplexing (OFDM) symbols; and determining a sensing measurement based on the first information, or determining downlink channel state information based on the first information.

In some embodiments of the second aspect, determining the sensing measurement based on the first information includes: constructing a first matrix based on the normalized correlation coefficient corresponding to the at least one TDT; and determining the sensing measurement based on the first matrix.

In the above embodiments, constructing the first matrix using the normalized correlation coefficient included in the first information, and determining the sensing measurement based on the first matrix, so that the estimation of the sensing measurement can be reliably achieved and the accuracy of the sensing measurement can be effectively ensured.

In some embodiments of the second aspect, determining the sensing measurement based on the first matrix includes: determining, based on the first matrix, an orthonormal basis of a noise subspace as a first orthonormal basis, and/or determining, based on the first matrix, an orthonormal basis of a signal subspace as a second orthonormal basis; and obtaining the sensing measurement by performing spectrum estimation based on the first orthonormal basis and/or the second orthonormal basis.

In the above embodiments, by determining the orthonormal basis of the noise subspace and/or the signal subspace based on the first matrix, and by performing the spectrum estimation based on the obtained orthonormal basis, the sensing measurement can be accurately determined, ensuring the accuracy of the wireless sensing.

In some embodiments of the second aspect, determining, based on the first matrix, the orthonormal basis of the noise subspace as the first orthonormal basis, and/or determining, based on the first matrix, the orthonormal basis of the signal subspace as the second orthonormal basis, includes: obtaining the first orthonormal basis and/or the second orthonormal basis by performing eigenvalue decomposition (EVD) on the first matrix.

In the above embodiments, the orthonormal basis of the noise subspace and/or the signal subspace can be accurately obtained through the eigenvalue decomposition, thereby further ensuring the reliability of the estimated sensing measurement and ensuring the accuracy of the wireless sensing.

In some embodiments of the second aspect, the sensing measurement is a Multiple Signal Classification (MUSIC) measurement.

In the above embodiments, the spectrum estimation can be performed based on the MUSIC algorithm, which can quickly and effectively obtain the sensing measurement that accurately represents the sensing target state without the need for additional spectrum estimation algorithms. This ensures both the accuracy of the wireless sensing and the versatility of the embodiments.

In some embodiments of the second aspect, the MUSIC measurement is expressed as:

$$P(f) = \frac{1}{\mathbf{v}^H(f)\mathbf{U}_n\mathbf{U}_n^H\mathbf{v}(f)};$$

where $\mathbf{v}(f) = [1\ e^{j2\pi f t_1 \Delta}\ e^{j2\pi f t_2 \Delta}\ e^{j2\pi f t_3 \Delta} \dots e^{j2\pi f t_{|\tau|}\Delta}]^T$, $P(f)$ represents a MUSIC measurement value with a Doppler frequency of $f$, $\mathbf{v}(f)$ represents a scan vector with the Doppler frequency of $f$, $\Delta$ represents a length of an OFDM symbol, $t_x$ represents a value of an $x^{th}$ TDT in the at least one TDT, a superscript T denotes matrix transpose, a superscript H denotes matrix conjugate transpose, j is an imaginary unit, i.e., the square root of -1, $\mathbf{U}_n$ is the first orthonormal basis, and $\mathbf{U}_s$ is the second orthonormal basis.

In the above embodiments, the sensing measurement can be accurately represented based on the above expression.

In some embodiments of the second aspect, in some embodiments, the resource element pair indicated by the TDT includes resource elements across the same subcarrier.

In some embodiments of the second aspect, the first matrix is a Hermitian Toeplitz matrix.

In some embodiments of the second aspect, the at least one TDT includes each TDT in a set of TDTs, and the set of TDTs is determined based on a set of OFDM symbol positions of the first reference signal.

In some embodiments of the second aspect, normalized correlation coefficients corresponding to the at least one TDT are arranged in a specific sequence.

In some embodiments of the second aspect, the TDT is determined based on the number of OFDM symbols between a resource element pair.

In some embodiments of the second aspect, the network device includes at least one of the following: a Location Management Function (LMF) network element, a Sensing Management Function (SMF) network element, or a base station.

In some embodiments of the second aspect, the first reference signal is a Channel State Information Reference Signal (CSI-RS), and the first information is Channel State Information (CSI); or the first reference signal is a Tracking Reference Signal (TRS), and the first information is a Time Domain Channel Properties (TDCP); or the first reference signal is a sensing reference signal, and the first information is sensing information.

In a third aspect, embodiments of the present disclosure provide a wireless sensing method, and the method is performed a communication system. The communication system includes a receiver and a network device, and the method includes: the receiver receives a first reference signal, the first reference signal being transmitted occupying at least two resource elements, and the resource elements being distributed across at least two Orthogonal Frequency Division Multiplexing (OFDM) symbols; the receiver sends first information, the first information including the first reference signal being transmitted occupying at least two resource elements, and the resource elements being distributed across at least two Orthogonal Frequency Division Multiplexing (OFDM) symbols; the network device determines a sensing measurement based on the first information, or determines downlink channel state information based on the first information.

In a fourth aspect, embodiments of the present disclosure provide a first information processing apparatus, and the apparatus includes a receiving module and a sending module.

The receiving module is configured to receive a first reference signal, the first reference signal being transmitted occupying at least two resource elements, and the resource elements being distributed across at least two Orthogonal Frequency Division Multiplexing (OFDM) symbols.

The sending module is configured to send first information, the first information including a normalized correlation coefficient corresponding to at least one time domain tag (TDT), the TDT being configured to indicate a time domain distance between a pair of resource elements, the first information being used for a network device to determine a sensing measurement, or the first information being used for a network device to determine downlink channel state information.

In a fifth aspect, embodiments of the present disclosure provide a second information processing apparatus, and the apparatus includes a receiving module and a processing module.

The receiving module is configured to receive first information, the first information including a normalized correlation coefficient corresponding to at least one time domain tag (TDT), the TDT being configured to indicate a time domain distance between a pair of resource elements, a first reference signal being transmitted occupying at least two resource elements, and the resource elements being distributed across at least two Orthogonal Frequency Division Multiplexing (OFDM) symbols.

The processing module is configured to determine a sensing measurement based on the first information, or to determine downlink channel state information based on the first information.

In a sixth aspect, embodiments of the present disclosure provide a communication device, including one or more processors, and the processors are configured to call computer instructions to cause the communication device to perform the wireless sensing methods described in the first and second aspects.

In a seventh aspect, embodiments of the present disclosure provide a storage medium storing instructions, and when the storing instructions are executed on a communication device, cause the communication device to perform the methods described in embodiments of the first, second, and third aspects.

In an eighth aspect, embodiments of the present disclosure provide a program product, and when the program product is executed by the communication device, causes the communication device to perform the methods described in embodiments of the first, second, and third aspects.

In a ninth aspect, embodiments of the present disclosure provide a computer program, and when the computer program is executed on a computer, causes the computer to perform the methods described in embodiments of the first, second, and third aspects.

In a tenth aspect, embodiments of the present disclosure provide a communication system, including a receiver, a transmitter, and a sensing target, the receiver is configured to perform the methods described in embodiments of the first aspect, the transmitter is configured to perform the methods described in embodiments of the second aspect, and the sensing target is configured to perform the methods described in embodiments of the third aspect.

It is understood that the aforementioned first information processing device, second information processing device, communication device, communication system, computer-readable storage medium, and computer program product are all used to perform the methods provided in the embodiments of the present disclosure. Therefore, the beneficial effects they can achieve can be referred to in the beneficial effects of the corresponding methods, and will not be repeated here.

The embodiments of the present disclosure provide an information processing method, an information processing apparatus, and a storage medium. In some embodiments, the terms "information processing method", "wireless sensing method", and "communication method", etc. can be interchanged. The terms "information processing apparatus", "wireless sensing apparatus", and "communication device", etc. can be interchanged. The terms "communication system", "wireless sensing system", and "communication system", etc. can be interchanged.

The embodiments of the present disclosure are not exhaustive, but merely illustrative of some embodiments, and are not intended to limit the specific protection scope of the present disclosure. Where there is no contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily interchanged. In addition, the optional implementation methods in a certain embodiment can be arbitrarily combined. In addition, the embodiments can be arbitrarily combined. For example, some or all steps of different embodiments can be arbitrarily combined, and a certain embodiment can be arbitrarily combined with the optional implementation methods of other embodiments.

In all embodiments of the present disclosure, unless otherwise specified or logically conflicting, the terminology and/or descriptions are consistent across embodiments and can be referenced interchangeably. Technical features from different embodiments can be combined to form new embodiments based on their inherent logical relationships.

The terminology used in these embodiments is for the purpose of describing specific embodiments only and is not intended to limit the present disclosure.

In embodiments of the present disclosure, unless otherwise stated, elements expressed in the singular form, such as "a", "an", "the", "above", "said", "aforementioned", "this", etc., can mean "one and only one", "one or more", or "at least one" etc. For example, when using articles such as "a", "an", and "the" in translation, the noun following the article can be understood as either a singular or a plural expression.

In embodiments of the present disclosure, "multiple" refers to two or more.

In some embodiments, terms such as "at least one of", "at least one item of', "at least one", "one or more", "a

**EP 4 712 629 A1**

plurality of", and "multiple" can be used interchangeably.

In some embodiments, expressions such as "at least one of A and B", "A and/or B", "A in one case, B in another case", and "in response to one case A, in response to another case B" can, depending on the context, include the following technical solutions: in some embodiments, A (executed regardless of B); in some embodiments, B (executed regardless of A); in some embodiments, execution is selected from A and B (A and B are selectively executed); in some embodiments, both A and B are executed. The same applies when there are more branches such as A, B, and C.

In some embodiments, the expression "A or B" can, depending on the context, include the following technical solutions: in some embodiments, A (executed regardless of B); in some embodiments, B (executed regardless of A); in some embodiments, execution is selected from A and B (A and B are selectively executed). The same applies when there are more branches such as A, B, and C.

The prefixes such as "first" and "second" in the embodiments of the present disclosure are only for distinguishing different descriptive objects and do not constitute restrictions on the positions, orders, priority, quantity, or contents of the descriptive objects. For the statements of the descriptive objects, please refer to the claims or the description in the context of the embodiments. The use of prefixes should not constitute unnecessary restrictions. For example, if the descriptive object is a "field", then the ordinal numbers before "field" in the "first field" and the "second field" do not restrict the position or the order between the "fields", and the "first" and the "second" do not restrict whether the "fields" they modify are in the same message, nor do they restrict the order of the "first field" and the "second field." As another example, if the descriptive object is a "level", then the ordinal numbers before "level" in the "first level" and the "second level" do not restrict the priority between "levels". In addition, the number of objects described is not limited by the ordinal number, it can be one or more. For example, in the "first device", the number of "devices" can be one or more. In addition, objects modified by different prefixes can be the same or different. For example, if the object is described as "device", then the "first device" and the "second device" can be the same device or different devices, and their types can be the same or different. Similarly, if the object is described as "information", then the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiments, terms such as "in response to...", "in response to determining...", "in the case of...", "when...", "if...", etc., can be interchanged.

In some embodiments, terms such as "greater than", "greater than or equal to", "not less than", "more than", "more than or equal to", "not less than", "higher than", "higher than or equal to", "not lower than", and "above" are interchangeable. Terms such as "less than", "less than or equal to", "not greater than", "less than", "less than or equal to", "not more than", "lower than", "lower than or equal to", "not higher than", and "below" are interchangeable.

In some embodiments, "device" can be interpreted as physical or virtual, and its name is not limited to the names described in the embodiments. Terms such as "apparatus", "equipment", "device", "circuit", "network element", "node", "function", "unit", "section", "system", "network", "chip", "chip system", "entity", and "body" are interchangeable.

In some embodiments, the "network" can be interpreted as devices included in the network (e.g., access network device, core network device, etc.).

In some embodiments, terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", and "bandwidth part (BWP)" are interchangeable.

In some embodiments, terms "terminal", "terminal device", "user equipment (UE)", "user terminal", and "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, and "client" are interchangeable.

In some embodiments, the access network device, the core network device, or the network device can be replaced with the terminal. For example, the communication between the access network device, the core network device, or the network device and the terminal can be replaced with communication between multiple terminals (e.g., also referred to as device-to-device (D2D), vehicle-to-everything (V2X), etc.). In this case, the structure can also be configured such that the terminal has all or part of the functions of the access network device. In addition, terms such as "uplink" and "downlink" can be replaced with terms corresponding to inter-terminal communication (e.g., "sidelink"). For example, the uplink channel, the downlink channel, etc., can be replaced with the sidelink channel, and the uplink link, the downlink link, etc., can be replaced with the sidelink.

In some embodiments, the terminal can be replaced with the access network device, the core network device, or the network device. In this case, the terminal can also be configured such that the access network device, the core network device, or the network device has a structure that possesses all or part of the functions of a terminal.

In some embodiments, the obtaining of data, information, etc., can comply with the laws and regulations of the country where the location is situated.

In some embodiments, data, information, etc., can be acquired after obtaining user's consent.

In addition, each element, each row, or each column in the tables of the present disclosure can be implemented as an independent embodiment, and any combination of any element, any row, or any column can also be implemented as an independent embodiment.

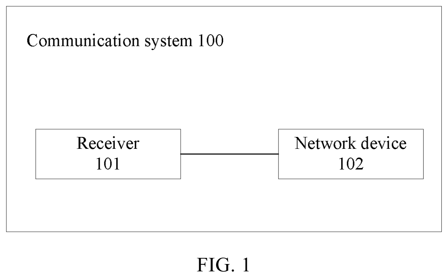

FIG. 1 is a schematic diagram of an architecture of a communication system according to embodiments of the present disclosure. As shown in FIG. 1, the communication system 100 includes a receiver 101 and a network device 102. In some embodiments, the receiver 101 can be a sensing receiver in a sensing system, user equipment in a communication system, or other network devices distinct from the network device 102.

In some embodiments, the network device 102 can include at least one of an access network (RAN) device or a core network device.

In some embodiments, the communication system 100 is, for example, the Long Term Evolution (LTE) system, the 5th generation (5G) mobile communication system, the 5G new radio (NR) system, and other future communication systems, but not limited to these.

In some embodiments, the terminal includes, for example, at least one of the following: mobile phone, wearable device, IoT device, car with communication capabilities, smart car, tablet, computer with wireless transceiver capabilities, virtual reality (VR) terminal device, augmented reality (AR) terminal device, wireless terminal device in industrial control, wireless terminal device in self-driving, wireless terminal device in remote medical surgery, wireless terminal device in smart grid, wireless terminal device in transportation safety, wireless terminal device in smart city, and wireless terminal device in smart home, but not limited to these.

In some embodiments, the access network device is, for example, a node or device that connects the terminal to a wireless network. The access network device can include at least one of the following: an evolved Node B (eNB) in a 5G communication system, next generation eNB (ng-eNB), next generation NodeB (gNB), node B (NB), home node B (HNB), home evolved nodeB (HeNB), radio backhaul equipment, radio network controller (RNC), base station controller (BSC), base transceiver station (BTS), base band unit (BBU), mobile switching center, base station in 6G communication system, Open RAN, Cloud RAN, base station in other communication systems, and access node in wireless fidelity (Wi-Fi) system, but not limited to these.

In some embodiments, the technical solutions of the present disclosure are applicable to Open RAN architectures. In this case, the interfaces between or within access network devices involved in the embodiments of the present disclosure can become internal interfaces of Open RAN. The processes and information interactions between these internal interfaces can be implemented through software or programs.

In some embodiments, the access network device can be composed of a central unit (CU) and a distributed unit (DU). The CU can also be referred to as a control unit. Using a CU-DU structure can separate the protocol layers of the access network device. Some protocol layer functions are centrally controlled by the CU, while the remaining part or all protocol layer functions are distributed in the DU, which is centrally controlled by the CU. However, the present disclosure is not limited to this.

In some embodiments, the core network device can be a single device, including one or more network elements, multiple devices or a group of devices, each including all or part of the aforementioned one or more network elements. The network element can be virtual or physical. The core network includes, for example, at least one of the Evolved Packet Core (EPC), the 5G Core Network (5GCN), or the Next Generation Core (NGC).

It can be understood that the communication system described in the present disclosure is for the purpose of more clearly illustrating the technical solutions of the present disclosure and does not constitute a limitation on the technical solutions provided in the present disclosure. Those skilled in the art will recognize that, with the evolution of system architecture and the emergence of new business scenarios, the technical solutions provided in the present disclosure are also applicable to similar technical problems.

The following embodiments of the present disclosure can be applied to the communication system 100 shown in FIG1, or to some of its entities, but are not limited to this. The entities shown in FIG1 are illustrative, the communication system can include all or some of the entities in FIG1, or other components not shown in FIG1. The number and form of each entity are arbitrary. The connection relationship between the entities is illustrative, the entities can be unconnected or connected, and the connection can be in any manner, including direct or indirect connections, wired or wireless connections.

The embodiments of the present disclosure can be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM™), CDMA2000, Ultra Mobile Broadband (UMB), IEEE 802.11 (Wi-Fi™), IEEE 802.16 (WiMAX™), IEEE 802.20, and Ultra-Wide Band (UWB), Bluetooth™, Public Land Mobile Network (PLMN) network, Device-to-Device (D2D) system, Machine-to-Machine (M2M) system, Internet of Things (IoT) system, Vehicle-to-Everything (V2X) system, systems utilizing other communication methods, and next-generation systems built upon them, etc. In addition, multiple systems can be combined (e.g., a combination of LTE or LTE-A with 5G).

In some embodiments, wireless communication technologies and wireless sensing technologies are highly similar. Because the sensing integration can combine the wireless communication and the wireless sensing, introducing close cooperation between the two, it improves the spectrum efficiency and reduces the network deployment cost.

In some embodiments, the wireless sensing requires estimating the distance, the orientation (e.g., horizontal and vertical angles), and velocity of the sensing target. In some embodiments, the sensing also includes the wireless tracking and the radio frequency identification (RFID) of the sensing target.

In some embodiments, for high-precision sensing, the sensing transmitter can transmit a dedicated reference signal. Such a reference signal can be referred to as the sensing reference signal. In bistatic mode, the sensing receiver measures the sensing reference signal to estimate the distance, the angle, and/or the velocity of the sensing target. In monostatic mode, the sensing transmitter estimates the distance, the angle, and/or the velocity of the sensing target by measuring the echo of the sensing reference signal.

In monostatic mode, the sensing transmitter and the sensing receiver are co-located, for example, the sensing transmitter and the sensing receiver are deployed on the same device. In bistatic mode, the sensing receiver and the sensing transmitter are not co-located, for example, the sensing receiver and the sensing transmitter are deployed on different devices or at different locations on the same device.

In some embodiments, a result obtained by the sensing receiver after the sensing reference signal measurement needs to be reported to the core network via the LTE Positioning Protocol (LPP), such as network elements like the Location Management Function (LMF) or the Sensing Management Function (SMF). The network element then performs the fusion of sensing information and the calculation and estimation of the final sensing measurement (e.g., distance, angle, and/or velocity).

In some embodiments, the sensing receiver directly reports the raw signal received on the resource elements of the sensing reference signal, the channel state information reference signal, or the tracking reference signal, or the raw signal received multiplied by the corresponding conjugate reference signal symbol, to the aforementioned core network elements such as the LMF or SMF.

In some embodiments, in actual wireless sensing and wireless communication scenarios, the reference signal may be distributed in multiple dimensions, for example, the sensing transmitter or the base station using multiple transmit antennas to transmit the reference signal, the sensing receiver using multiple receive antennas to receive the reference signal, the reference signal occupying multiple time units, such as multiple OFDM symbols, or even the reference signal being transmitted in multiple frequency ranges, such as transmitted in multiple component carriers (CC) or the bandwidth part (BWP).

In this case, the raw signals received on the resource elements of the reference signal by the sensing receiver are multi-dimensional signals. If they are directly reported to the core network or the base station without any processing (including fusion, etc.), the reporting overhead will be very high, inevitably consuming a large amount of spectrum resources. Considering the situation of multiple receivers reporting simultaneously, the network congestion may even occur.

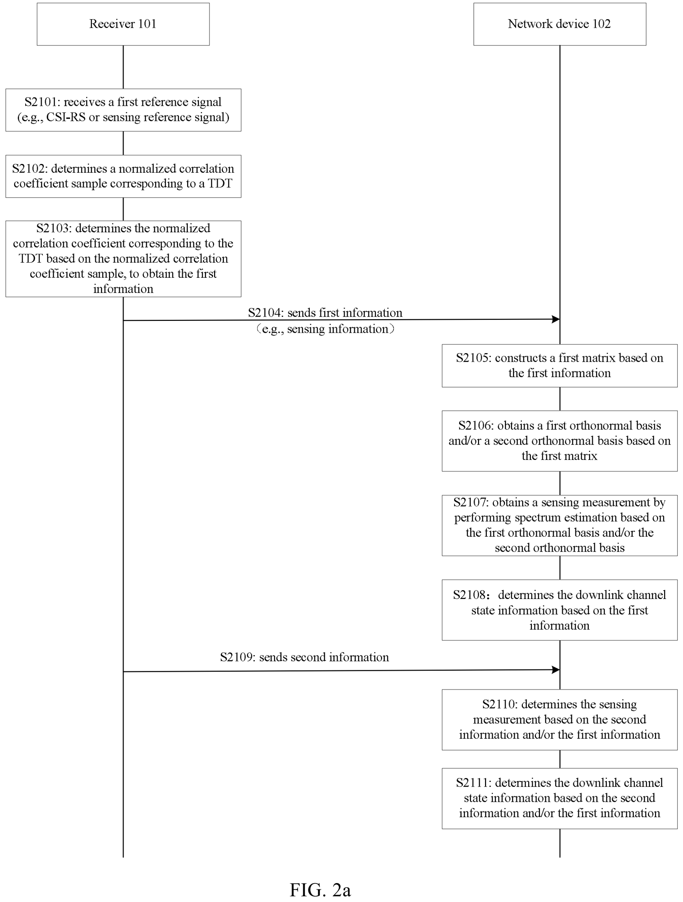

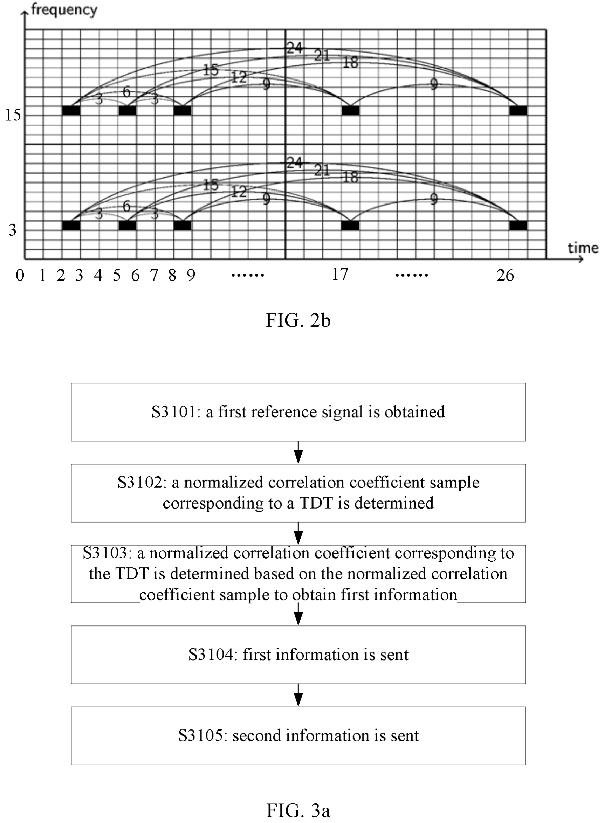

FIG. 2a is an interactive schematic diagram of a wireless sensing method according to embodiments of the present disclosure. As shown in FIG. 2, the embodiments of the present disclosure relate to the wireless sensing, and is applied to a communication system 100. The method includes following steps.

In step S2101, the receiver 101 receives a first reference signal.

In some embodiments, the first reference signal can be transmitted by a sensing transmitter or by a network device 102. For example, the first reference signal can be transmitted by a base station. The embodiments of the present disclosure do not limit this. In some embodiments, the first reference signal is used for wireless sensing, or the first reference signal is used for determining downlink channel state information.

In some embodiments, the first reference signal is a sensing reference signal. In some embodiments, the first reference signal is the CSI-RS. In some embodiments, the first reference signal is the TRS.

In some embodiments, the first reference signal is transmitted occupying at least two resource elements, and the resource elements can be time-frequency domain resources. In some embodiments, the first reference signal includes data transmitted in at least two resource elements. In some embodiments, the resource elements are distributed across different OFDM symbols. In some embodiments, the at least two resource elements occupied by transmission of the first reference signal are distributed across at least two OFDM symbols. In some embodiments, the resource elements can be distributed across different subcarriers. In some embodiments, the resource element can also be referred to as RE, or any name that can be interchanged with the resource element, and the present disclosure does not limit the name of the resource element.

In step S2102, the receiver 101 determines a normalized correlation coefficient sample corresponding to a time domain tag (TDT).

In some embodiments, the TDT is used to indicate a time domain distance between a pair of resource elements.

In some embodiments, the TDT is determined based on the number of OFDM symbols between a resource element pair. In some embodiments, the TDT is a positive integer. In some embodiments, the pair of resource elements indicated by the TDT are resource elements across the same subcarrier.

In some embodiments, at least one normalized correlation coefficient sample for at least one TDT can be determined. For example, the normalized correlation coefficient sample(s) for each TDT in the set of TDTs can be determined, or the normalized correlation coefficient(s) corresponding to some TDT(s) in the set of TDTs can be determined. The present disclosure does not limit the number of TDTs and the normalized correlation coefficient samples corresponding to the TDT.

In some embodiments, the normalized correlation coefficient sample can be used to calculate the normalized correlation coefficient. In some embodiments, the normalized correlation coefficient sample can also be referred to as a sub-normalized correlation coefficient, a sensing parameter, a state parameter, etc., and the name of the normalized correlation coefficient sample is not limited in the present disclosure.

In some embodiments, the receiver 101 can determine the normalized correlation coefficient sample(s) for each TDT in the set of TDTs. In some embodiments, the set of TDTs can be determined based on a set of OFDM symbol positions of the resource elements.

In some embodiments, step S2102 can include the following steps: determining the normalized correlation coefficient sample corresponding to the first resource element pair based on channel frequency responses of the two resource elements in the first resource element pair. In some embodiments, the normalized correlation coefficient sample(s) corresponding to each TDT can be determined based on the channel frequency response of the corresponding resource element pair.

In some embodiments, the first resource element pair is any resource element pair corresponding to the first TDT. In some embodiments, the first TDT can be any TDT, for example, any TDT in the set of TDTs. In some embodiments, a normalized correlation coefficient sample corresponds to a resource element pair.

In some embodiments, the normalized correlation coefficient sample corresponding to the first resource element pair can be determined based on the following formula: $\frac{H_\ell H_{\ell+t}^*}{|H_\ell| \cdot |H_{\ell+t}|}$, or $\frac{H_{k,\ell} H_{k,\ell+t}^*}{|H_{k,\ell}| \cdot |H_{k,\ell+t}|}$, where $H_\ell$ and $H_{\ell+t}$ represent the channel frequency responses of the two resource elements in the first resource element pair, respectively. In some embodiments, $\ell + t$ and $\ell$ can represent the OFDM symbol positions of the two resource elements, respectively, with the difference t equal to the first TDT.

In some embodiments, $H_{k,\ell}$ and $H_{k,\ell+t}$ can also represent the channel frequency responses of the two resource elements in the first resource element pair, respectively. In some embodiments, the value of $k$ can be the position of the subcarrier where the two resource elements are located.

In some embodiments, a TDT can correspond to multiple resource element pairs. Correspondingly, the normalized correlation coefficient sample corresponding to each resource element pair can be determined based on the channel frequency responses of the multiple resource element pairs.

In some embodiments, the multiple resource element pairs corresponding to a TDT can include resource element pairs distributed across different subcarriers. The two resource elements in any resource element pair corresponding to a TDT are distributed across the same subcarrier, and these two resource elements can be distributed across different OFDM symbols, or used by different transmit/receive antenna pairs, or used by different transmit/receive antenna ports.

In some embodiments, the resource element pair(s) corresponding to the first TDT include(s) at least one of the following:

a resource element pair consisting of two resource elements distributed across different OFDM symbols;
at least two resource element pairs used by different transmit/receive antenna pairs;
at least two resource element pairs used by different transmit/receive antenna port pairs; or
at least two resource element pairs distributed across different subcarriers.

In some embodiments, the resource elements in each of the at least two resource element pairs used by different transmit/receive antenna pairs, the resource elements in each of the at least two resource element pairs used by different transmit/receive antenna port pairs, or the resource elements in each of the at least two resource element pairs distributed across different subcarriers can be evenly distributed across different OFDM symbols.

In some embodiments, a resource element pair consisting of two resource elements distributed across different OFDM symbols can include at least one of the following: at least two resource element pairs used by different transmit/receive antenna pairs; at least two resource element pairs used by different transmit/receive antenna port pairs; or at least two resource element pairs distributed across different subcarriers.

It can be understood that the specific normalized correlation coefficient(s) included in the normalized correlation coefficient sample(s) corresponding to the first TDT can be determined based on actual situations. For example, if the same transmit/receive antenna pair is used for transmitting the first reference signal, then there will be no different transmit/receive antenna pairs corresponding to the first TDT. That is, the normalized correlation coefficient(s) corresponding to the channel frequency responses for different transmit/receive antenna pairs corresponding to the first TDT is/are not included.

As shown in FIG. 2b, a schematic diagram of resource occupancy by the first reference signal is illustrated. Taking a first TDT equal to 3 as an example, the two resource elements corresponding to the first TDT and distributed across different OFDM symbols can include, for example, the resource element corresponding to the 2nd OFDM symbol across Subcarrier 3 and the resource element corresponding to the 5th OFDM symbol across Subcarrier 3, the resource element corresponding to the 5th OFDM symbol across Subcarrier 3 and the resource element corresponding to the 8th OFDM symbol across Subcarrier 3, etc.

Taking a first TDT equal to 6 as an example, the at least two resource element pairs corresponding to the first TDT and distributed across different subcarriers can include, for example, the resource element corresponding to the 2nd OFDM symbol across Subcarrier 3 and the resource element corresponding to the 8th OFDM symbol across Subcarrier 3, the resource element corresponding to the 2nd OFDM symbol across Subcarrier 15 and the resource element corresponding to the 8th OFDM symbol across Subcarrier 15. According to the embodiments provided in the present disclosure, and referring to the schematic diagram of resource occupancy by the first reference signal shown in FIG. 2b, the horizontal axis represents time, the vertical axis represents frequency, each rectangular grid represents a resource element, and the black-filled grid represents the resource element occupied by the transmission of the first reference signal. As shown in FIG. 2b, the resource elements for the first reference signal are distributed across the 2nd, 5th, 8th, 17th, and 26th OFDM symbols (numbered starting from 0) across Subcarrier 3, and distributed across the 2nd, 5th, 8th, 17th, and 26th OFDM symbols (numbered starting from 0) across Subcarrier 15. Correspondingly, the set of subcarrier positions of the resource elements is $\mathcal{K}$ ={3, 15}, and the set of OFDM symbol positions is $\mathcal{L}$ = {2, 5, 8, 17, 26}.

Further, the set of TDTs can be determined based on the following formula: $T$: $T = \{\ell_j - \ell_i \mid \ell_i > \ell_j;\ \ell_i, \ell_j \in \mathcal{L}\}$, that is, the set of TDTs T = {3, 6, 9, 12, 15, 18, 21, 24} can be obtained. For example, in step S2102, at least one normalized correlation coefficient sample corresponding to at least one TDT in the set $\mathcal{T}$ can be determined.

For example, at least one normalized correlation coefficient sample corresponding to a TDT of 3 can be obtained:

$$\frac{H_{3,2}H_{3,5}^*}{|H_{3,2}||H_{3,5}|}, \quad \frac{H_{3,5}H_{3,8}^*}{|H_{3,5}||H_{3,8}|}, \quad \frac{H_{15,2}H_{15,5}^*}{|H_{15,2}||H_{15,5}|}, \text{ and } \frac{H_{15,5}H_{15,8}^*}{|H_{15,5}||H_{15,8}|}.$$

At least one normalized correlation coefficient sample corresponding to a TDT of 6 can be obtained: $\frac{H_{3,2}H_{3,8}^*}{|H_{3,2}||H_{3,8}|}$, and $\frac{H_{15,2}H_{15,8}^*}{|H_{15,2}||H_{15,8}|}$.

At least one normalized correlation coefficient sample corresponding to a TDT of 9 can be obtained:

$$\frac{H_{3,8}H_{3,17}^*}{|H_{3,8}||H_{3,17}|}, \quad \frac{H_{3,17}H_{3,26}^*}{|H_{3,17}||H_{3,26}|}, \quad \frac{H_{15,8}H_{15,17}^*}{|H_{15,8}||H_{15,17}|}, \text{ and } \frac{H_{15,17}H_{15,26}^*}{|H_{15,17}||H_{15,26}|}.$$

At least one normalized correlation coefficient sample corresponding to a TDT of 12 can be obtained:

$$\frac{H_{3,5}H_{3,17}^*}{|H_{3,5}||H_{3,17}|}, \text{ and } \frac{H_{15,5}H_{15,17}^*}{|H_{15,5}||H_{15,17}|}.$$

At least one normalized correlation coefficient sample corresponding to a TDT of 15 can be obtained:

$$\frac{H_{3,2}H_{3,17}^*}{|H_{3,2}||H_{3,17}|}, \text{ and } \frac{H_{15,2}H_{15,17}^*}{|H_{15,2}||H_{15,17}|}.$$

At least one normalized correlation coefficient sample corresponding to a TDT of 18 can be obtained:

$$\frac{H_{3,8}H_{3,26}^*}{|H_{3,8}||H_{3,26}|}, \text{ and } \frac{H_{15,8}H_{15,26}^*}{|H_{15,8}||H_{15,26}|}.$$

At least one normalized correlation coefficient sample corresponding to a TDT of 21 can be obtained:

$$\frac{H_{3,5}H_{3,26}^*}{|H_{3,5}||H_{3,26}|}, \text{ and } \frac{H_{15,5}H_{15,26}^*}{|H_{15,5}||H_{15,26}|}.$$

At least one normalized correlation coefficient sample corresponding to a TDT of 24 can be obtained:

$$\frac{H_{3,2}H_{3,26}^*}{|H_{3,2}||H_{3,26}|}, \text{ and } \frac{H_{15,2}H_{15,26}^*}{|H_{15,2}||H_{15,26}|}.$$

It should be noted that, for ease of understanding, the frequency domain resources for the first reference signal shown in FIG. 2b are distributed uniformly in comb-shaped. However, embodiments of the present disclosure can be applied to any distribution of the first reference signal in the frequency domain (including non-uniform distribution). In addition, the resource occupancy by the first reference signal shown in FIG. 2b only involves the resource occupancy of one transmit/receive antenna pair, or the resource occupancy of one transmit/receive antenna port pair. In some embodiments, the first reference signal can also be transmitted through multiple transmit/receive antenna pairs or multiple transmit/receive antenna port pairs.

In step S2103, the receiver 101 determines the normalized correlation coefficient corresponding to the TDT based on the normalized correlation coefficient sample, to obtain the first information.

In some embodiments, the normalized correlation coefficient corresponding to each TDT in the set of TDTs, or the normalized correlation coefficient(s) corresponding to one or more TDTs, can be determined in step S2103.

In some embodiments, the first information can include the normalized correlation coefficient corresponding to at least one TDT, or the first information can be the normalized correlation coefficient corresponding to at least one TDT. For example, the first information can be the normalized correlation coefficient corresponding to each TDT. In some embodiments, the amplitude of each normalized correlation coefficient is less than one.

In some embodiments, the first information can include the normalized correlation coefficient corresponding to each TDT in the set of TDTs. In some embodiments, the first information is used for the network device 102 to determine the sensing measurement, or the first information is used for the network device 102 to determine the downlink channel state information. For example, the first information can be sensing information used to determine the sensing measurement, or the first information can be channel state information used to determine the downlink channel state, or the first information can also be Time Domain Channel Properties (TDCP) used to determine the downlink channel state.

In some embodiments, the normalized correlation coefficient included in the first information is information that can be used for the wireless sensing or for determining the downlink channel state information. For example, the normalized correlation coefficient in the first information can be used to estimate Doppler frequency, velocity, direction, etc., and the first information can also be used to determine the downlink channel state information.

In some embodiments, the specific type of the first information can depend on the type of the first reference signal received. In some embodiments, the first reference signal is the Channel State Information Reference Signal (CSI-RS), and the first information is the Channel State Information (CSI). In some embodiments, the first reference signal is the Tracking Reference Signal (TRS), and the first information is the Time Domain Channel Properties (TDCP). In some embodiments, the first reference signal is a sensing reference signal, and the first information is sensing information.

In some embodiments, the name of the first information is not limited and can be, for example, "normalized correlation coefficient set", "sensing information", "channel state information", etc.

In some embodiments, the normalized correlation coefficients corresponding to at least one TDT included in the first information can be arranged in a specific sequence. For example, the normalized correlation coefficients can be arranged in an ascending or descending order according to the TDT. For example, the first information includes normalized correlation coefficients corresponding to TDTs of 3, 6, 9, and 12, respectively. In the first information, a sequence of normalized correlation coefficients that is arranged in an ascending order according to the TDT can be included.

In some embodiments, the normalized correlation coefficient corresponding to the TDT can be obtained by calculating a statistical average of the normalized correlation coefficient samples corresponding to the TDT. In other embodiments, other methods can also be used to calculate the normalized correlation coefficient based on the normalized correlation coefficient samples, for example, by weighting each normalized correlation coefficient sample and calculating the statistical average. Embodiments of the present disclosure do not limit this.

For example, referring to the schematic diagram of resource occupancy by the first reference signal shown in FIG. 2b, the first information can include the normalized correlation coefficient(s) corresponding to one or more TDTs in the set of TDTs $\mathcal{T}$ = {3, 6, 9, 12, 15, 18, 21, 24}. For example, the first information can include the set $\mathcal{C}$ = {$c_3$, $c_6$, $c_9$, $c_{12}$, $c_{15}$, $c_{18}$, $c_{21}$, $c_{24}$}. In some embodiments, the elements in set $C$ are arranged in an according to the TDT.

In some embodiments, set $C$ can sequentially include the normalized correlation coefficients corresponding to TDT of 3: $c_3 = \frac{1}{4}\left(\frac{H_{3,2}H_{3,5}^*}{|H_{3,2}||H_{3,5}|} + \frac{H_{3,5}H_{3,8}^*}{|H_{3,5}||H_{3,8}|} + \frac{H_{15,2}H_{15,5}^*}{|H_{15,2}||H_{15,5}|} + \frac{H_{15,5}H_{15,8}^*}{|H_{15,5}||H_{15,8}|}\right)$ ; the normalized correlation coefficient corresponding to TDT of 6: $c_6 = \frac{1}{2}\left(\frac{H_{3,2}H_{3,8}^*}{|H_{3,2}||H_{3,8}|} + \frac{H_{15,2}H_{15,8}^*}{|H_{15,2}||H_{15,8}|}\right)$ ; the normalized correlation coefficient corresponding

13

to TDT of 9: $c_9 = \frac{1}{4}\left(\frac{H_{3,8}H_{3,17}^*}{|H_{3,8}||H_{3,17}|} + \frac{H_{3,17}^*H_{3,26}^*}{|H_{3,17}||H_{3,26}|} + \frac{H_{15,8}H_{15,17}^*}{|H_{15,8}||H_{15,17}|} + \frac{H_{15,17}H_{15,26}^*}{|H_{15,17}||H_{15,26}|}\right)$ ; the normalized correlation coefficient corresponding to TDT of 12: $c_{12} = \frac{1}{2}\left(\frac{H_{3,5}H_{3,17}^*}{|H_{3,5}||H_{3,17}|} + \frac{H_{15,5}H_{15,17}^*}{|H_{15,3}||H_{15,17}|}\right)$ ; the normalized correlation coefficient corresponding to TDT of 15: $c_{15} = \frac{1}{2}\left(\frac{H_{3,2}H_{3,17}^*}{|H_{3,2}||H_{3,17}|} + \frac{H_{15,2}H_{15,17}^*}{|H_{15,2}||H_{15,17}|}\right)$ ; the normalized correlation coefficient corresponding to TDT of 18: $c_{18} = \frac{1}{2}\left(\frac{H_{3,8}H_{3,26}^*}{|H_{3,8}||H_{3,26}|} + \frac{H_{15,8}H_{15,26}^*}{|H_{15,8}||H_{15,26}|}\right)$ ; the normalized correlation coefficient corresponding to TDT of 21: $c_{21} = \frac{1}{2}\left(\frac{H_{3,5}H_{3,26}^*}{|H_{3,5}||H_{3,26}|} + \frac{H_{15,5}H_{15,26}^*}{|H_{15,5}||H_{15,26}|}\right)$ ; and the normalized correlation coefficient corresponding to TDT of 24: $c_{24} = \frac{1}{2}\left(\frac{H_{3,2}H_{3,26}^*}{|H_{3,2}||H_{3,26}|} + \frac{H_{15,2}H_{15,26}^*}{|H_{15,2}||H_{15,26}|}\right)$ .

In step S2104, the receiver 101 sends first information.

In some embodiments, the first information in step S2104 can be determined and obtained based on steps S2102 to S2103, or obtained based on other methods. For example, the first information can be determined by the receiver 101 based on a protocol, or sent by an upper layer. Embodiments of the present disclosure do not limit this. In some embodiments, the first information can be determined based on a first reference signal. In some embodiments, the first information can be directly determined based on the channel frequency response of each resource element occupied by the transmission of the first reference signal.

In some embodiments, the receiver 101 sends the first information to the network device 102, or the receiver 101 broadcasts the first information, or the receiver 101 sends the first information to other entities. Embodiments of the present disclosure do not limit this.

In some embodiments, the network device 102 includes at least one of the following: the LMF network element, the SMF network element, or the base station. In some embodiments, the LMF network element and the SMF network element can be used for the wireless sensing, for example, for determining the sensing measurement. In some embodiments, the base station can be used to determine the downlink channel state information.

In some embodiments, the first information is sent to the LMF network element. In some embodiments, the first information is sent to the SMF network element. In some embodiments, the first information is sent to both the LMF network element and the SMF network element. In some embodiments, the first information is sent to the base station. In some embodiments, the first information is sent to the base station, and the base station sends the first information to the LMF network element and/or the SMF network element.

In some embodiments, to which network device 102 the first information is to be sent can be determined based on the type of the first information. In some embodiments, the first information can be sent to the base station and the LMF and/or SMF network elements, and the first information sent to the base station and the first information sent to the LMF and/or SMF network elements can be different types of information. For example, the first information sent to the base station can be first information used to determine the downlink channel state information, and the first information sent to the LMF and/or SMF network elements can be first information used to determine the sensing measurement.

In some embodiments, if the first information is channel state information or Time Domain Channel Properties, the receiver 101 can send the first information to the base station. If the first information is sensing information, the receiver 101 can send the first information to the LMF and/or SMF network elements.

In some embodiments, the network device 102 receives the first information. In some embodiments, the LMF network element receives the first information. In some embodiments, the SMF network element receives the first information. In some embodiments, both the LMF network element and the SMF network element receive the first information. In some embodiments, the base station receives the first information. In some embodiments, the base station receives the first information and sends the first information to the LMF network element and/or the SMF network element.

In step S2105, the network device 102 constructs a first matrix based on the first information.

In some embodiments, the first matrix can be a Hermitian Toeplitz matrix. In some embodiments, the first matrix can also be any matrix that can be used by the network device 102 to determine the sensing measurement. In some embodiments, the first matrix can be constructed based on the normalized correlation coefficient corresponding to at least one TDT in the first information.

Referring to the example shown in FIG. 2b, the constructed first matrix can be, for example, the following matrix:

$$\mathbf{R} = \begin{bmatrix} 1 & c_3^* & c_6^* & c_9^* & c_{12}^* & c_{15}^* & c_{18}^* & c_{21}^* & c_{24}^* \\ c_3 & 1 & c_3^* & c_6^* & c_9^* & c_{12}^* & c_{15}^* & c_{18}^* & c_{21}^* \\ c_6 & c_3 & 1 & c_3^* & c_6^* & c_9^* & c_{12}^* & c_{15}^* & c_{18}^* \\ c_9 & c_6 & c_3 & 1 & c_3^* & c_6^* & c_9^* & c_{12}^* & c_{15}^* \\ c_{12} & c_9 & c_6 & c_3 & 1 & c_3^* & c_6^* & c_9^* & c_{12}^* \\ c_{15} & c_{12} & c_9 & c_6 & c_3 & 1 & c_3^* & c_6^* & c_9^* \\ c_{18} & c_{15} & c_{12} & c_9 & c_6 & c_3 & 1 & c_3^* & c_6^* \\ c_{21} & c_{18} & c_{15} & c_{12} & c_9 & c_6 & c_3 & 1 & c_3^* \\ c_{24} & c_{21} & c_{18} & c_{15} & c_{12} & c_9 & c_6 & c_3 & 1 \end{bmatrix}.$$

In step S2106, the network device 102 obtains a first orthonormal basis and/or a second orthonormal basis based on the first matrix.

In some embodiments, the network device 102 can obtain the first orthonormal basis and/or the second orthonormal basis by performing eigenvalue decomposition (EVD) on the first matrix. In some embodiments, the first orthonormal basis is an orthonormal basis of the noise subspace. In some embodiments, the second orthonormal basis is an orthonormal basis of the signal subspace.

In some embodiments, obtaining the first orthonormal basis and/or the second orthonormal basis by performing eigenvalue decomposition on the first matrix can be expressed as: $\mathbf{R} = [\mathbf{U}_s \quad \mathbf{U}_n]\begin{bmatrix} \boldsymbol{\Lambda}_s & \\ & \boldsymbol{\Lambda}_n \end{bmatrix}\begin{bmatrix} \mathbf{U}_s^H \\ \mathbf{U}_n^H \end{bmatrix}$, where $\mathbf{U}_n$ is the first orthonormal basis, $\mathbf{U}_s$ is the second orthonormal basis, $\Lambda_s$ is the eigenvalue corresponding to a basis vector of the signal subspace, and $\Lambda_n$ is the eigenvalue corresponding to a basis vector of the noise subspace.

In step S2107, the network device 102 obtains a sensing measurement by performing spectrum estimation based on the first orthonormal basis and/or the second orthonormal basis.

In some embodiments, the Multiple Signal Classification (MUSIC) spectrum estimation can be performed based on the first orthonormal basis and/or the second orthonormal basis, or the Estimating Signal Parameters via Rational Invariant Technique (ESPRIT) is conducted based on the first orthonormal basis and/or the second orthonormal basis, etc.

In some embodiments, taking the MUSIC spectrum estimation as an example, the obtained sensing measurement can be, for example, expressed as $P(f) = \dfrac{1}{\mathbf{v}^H(f)\mathbf{U}_n\mathbf{U}_n^H\mathbf{v}(f)}$, where $\mathbf{v}(f) = [1 \; e^{j2\pi f t_1 \Delta} \; e^{j2\pi f t_2 \Delta} \; e^{j2\pi f t_3 \Delta} \; ... \; e^{j2\pi f t_{|\tau|} \Delta}]^T$, $P(f)$ represents a MUSIC measurement value with a Doppler frequency of $f$, $\mathbf{v}(f)$ represents a scan vector with the Doppler frequency of $f$, $\Delta$ represents a length of an OFDM symbol, $t_x$ represents a value of an $x^{th}$ TDT in the at least one TDT, a superscript T denotes matrix transpose, a superscript H denotes matrix conjugate transpose, j is an imaginary unit, i.e., the square root of -1, $\mathbf{U}_n$ is the first orthonormal basis, and $\mathbf{U}_s$ is the second orthonormal basis.

In other embodiments, the sensing measurement obtained based on the MUSIC spectrum estimation can also be represented in other forms, which is not limited in the present disclosure.

In some embodiments, the sensing measurement can be used to indicate information such as the Doppler frequency, the motion direction, and/or the velocity of the sensing target.

In some embodiments, the sensing measurement can include sensing spectrum estimation or the spectrum estimation component. In some embodiments, the sensing measurement can also be referred to as the sensing spectrum estimation or the sensing spectrum estimation component.

In step S2108, the network device 102 determines the downlink channel state information based on the first information.

In some embodiments, the network device 102, such as a base station, can determine time-domain precoding information based on the normalized correlation coefficients corresponding to each TDT included in the first information. In some embodiments, the network device 102 can further compensate for the downlink transmission through the time-domain precoding to achieve more accurate signal transmission.

In step S2109, the receiver 101 sends second information.

In some embodiments, the second information in step S2109 can be determined by the receiver 101 itself, or obtained based on other methods. For example, the second information is determined by receiver 101 based on a protocol, or is transmitted by an upper layer. Embodiments of the present disclosure do not limit this.

In some embodiments, the second information is used by the network device 102 to determine the sensing measurement, or used by the network device 102 to determine the downlink channel state information. In some embodiments, the second information is used to indicate that there is an update to the normalized correlation coefficient corresponding to a TDT among the at least one TDT included in the first information. In some embodiments, the second information can be an updated normalized correlation coefficient, or the second information can include an updated normalized correlation coefficient.

In some embodiments, the second information can be determined based on a second reference signal. In some embodiments, the second information can be directly determined based on the channel frequency response of each resource element occupied by the transmission of the second reference signal. In some embodiments, the second reference signal can be a reference signal received by the receiver 101 after receiving the first reference signal.

In some embodiments, the specific type of the second information can depend on the type of the new second reference signal received. In some embodiments, the new reference signal is a Channel State Information Reference Signal (CSI-RS), and the second information is Channel State Information (CSI). In some embodiments, the new reference signal is a Tracking Reference Signal (TRS) (e.g., the CSI-RS for tracking in the 3GPP protocol), and the second information is Time Domain Channel Properties (TDCP). In some embodiments, the new reference signal is a sensing reference signal, and the second information is sensing information.

In some embodiments, the name of the second information is not limited, and can include, for example, "updated normalized correlation coefficient set", "updated information", "updated sensing information", "updated channel state information", "sensing information", "channel state information", etc.

In some embodiments, the second information is sent to the LMF network element. In some embodiments, the second information is sent to the SMF network element. In some embodiments, the second information is sent to both LMF and SMF network elements. In some embodiments, the second information is sent to the base station. In some embodiments, the second information is sent to the base station, and the base station then sends the second information to the LMF network element and/or the SMF network element.

In some embodiments, to which network device 102 the second information is to be sent can be determined based on the type of the second information. In some embodiments, the second information is sent to the base station and to the LMF and/or SMF network elements, and the second information sent to the base station and the second information sent to the LMF and/or SMF network elements can be different types of information. For example, the second information sent to the base station can be first information used to determine the downlink channel state information, and the second information sent to the LMF and/or SMF network elements can be second information used to determine the sensing measurement.

In some embodiments, the receiver 101 sends the second information in response to an update to the normalized correlation coefficient corresponding to the second TDT among the normalized correlation coefficients corresponding to the at least one TDT included in the first information. In some embodiments, the receiver 101 sends the second information in the case where it determines that the normalized correlation coefficient corresponding to the second TDT among the normalized correlation coefficients corresponding to the at least one TDT included in the first information has been updated. In some embodiments, the receiver 101 sends the second information when the normalized correlation coefficient corresponding to the second TDT among the normalized correlation coefficients corresponding to the at least one TDT included in the first information is updated.

For example, if the receiver 101 receives a new reference signal, the receiver 101 can determine the normalized correlation coefficient corresponding to at least one TDT based on the reference signal. If there is a different normalized correlation coefficient corresponding to the same TDT among the normalized correlation coefficients in the first information, the second information can be sent.

In some embodiments, the second TDT can include multiple TDTs. In some embodiments, the receiver 101 determines that the normalized correlation coefficients corresponding to multiple TDTs among the at least one TDT included in the first information have been updated, and then sends the second information. In some embodiments, the second information can include the updated normalized correlation coefficients corresponding to the multiple TDTs.

In some embodiments, the second information includes the updated normalized correlation coefficient corresponding to the second TDT.

In other embodiments, the second information can also include the normalized correlation coefficients corresponding to each TDT among the at least one TDT included in the first information. In some embodiments, the second information can also include the normalized correlation coefficients corresponding to each TDT in the set of TDTs.

In some embodiments, optional implementations for determining the second information and the updated normalized correlation coefficient corresponding to the second TDT can refer to the above embodiments of steps S2102 and S2103, as well as other related parts in the embodiments involved in FIG. 2a, which will not be repeated here.

In step S2110, the network device 102 determines the sensing measurement based on the second information and/or the first information.

In some embodiments, if the second information only includes the normalized correlation coefficient corresponding to the second TDT, the network device 102 can determine the sensing measurement based on the normalized correlation coefficient included in the second information, combined with the normalized correlation coefficient included in the first information. In some embodiments, if the second information includes the normalized correlation coefficients corresponding to each TDT among the at least one TDT included in the first information, the network device 102 can directly determine the sensing measurement based on the second information, without the participation of the normalized correlation coefficients included in the first information.

In some embodiments, optional implementations of step S2110 can refer to the optional implementations of steps S2105 to S2107 described above, and will not be repeated here. For example, the normalized correlation coefficient corresponding to the second TDT in the first matrix can be replaced with the updated normalized correlation coefficient corresponding to the second TDT included in the second information, and the sensing measurement can be determined based on the replaced first matrix, but this is not limited to this.

In step S2111, the network device 102 determines the downlink channel state information based on the second information and/or the first information.

In some embodiments, if the second information only includes the normalized correlation coefficient corresponding to the second TDT, the network device 102 can determine the sensing measurement or the downlink channel state information based on the normalized correlation coefficient included in the second information, combined with the normalized correlation coefficient included in the first information. In some embodiments, if the second information includes the normalized correlation coefficients corresponding to each TDT among the at least one TDT included in the first information, the network device 102 can directly determine the sensing measurement or the downlink channel state information based on the second information, without the participation of the normalized correlation coefficients included in the first information.

In some embodiments, optional implementations of step S2111 can refer to the optional implementations of step S2108 described above, and will not be repeated here.

In some embodiments, the names of information, etc., are not limited to the names recorded in the embodiments. Terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" can be used interchangeably.

In some embodiments, terms such as "codebook", "codeword", "precoding matrix", etc. may be interchangeable with each other. For example, a codebook can be a collection of one or more codewords/precoding matrices.

In some embodiments, terms such as "uplink", "UL", and "physical uplink" may be interchangeable with each other, terms such as "downlink", "DL", and "physical downlink" may be interchangeable with each other, and terms such as "side", "sidelink", "sidelink communication", "communication over sidelink", "direct link", "direct link communication", and "communication over direct link" may be interchangeable with each other.

In some embodiments, terms such as "downlink control information (DCI)", "downlink (DL) assignment", "DL DCI", "uplink (UL) grant", "UL DCI", etc. can be interchangeable with each other.

In some embodiments, terms such as "Physical Downlink Shared Channel (PDSCH)" and "DL data" may be interchangeable with each other, and terms such as "Physical Uplink Shared Channel (PUSCH)" and "UL data" may be interchangeable with each other.

In some embodiments, terms such as "radio", "wireless", "radio access network (RAN)", "access network (AN)", "RAN based", etc. may be interchangeable with each other.

In some embodiments, terms such as "search space", "search space set", "search space configuration", "search space set configuration", "control resource set (CORESET)", and "CORESET configuration" may be interchangeable with each other.

In some embodiments, terms such as "synchronization signal (SS)", "synchronization signal block (SSB)", "reference signal (RS)", "pilot", and "pilot signal" may be interchangeable with each other.

In some embodiments, terms such as "time", "time point", "moment", "time position", etc. may be interchangeable with each other, and terms such as "duration", "time period", "time window", "window", "time", etc. may be interchangeable with each other.

In some embodiments, terms such as "component carrier (CC)", "cell", "frequency carrier", "carrier frequency", etc. may be interchangeable with each other.

In some embodiments, terms such as "resource block (RB)", "physical resource block (PRB)", "sub carrier group (SCG)", "resource element group (REG)", "PRB pair", "RB pair", "resource element (RE)", "subcarrier", "resource particle", etc. may be interchangeable with each other.

In some embodiments, terms such as wireless access scheme and waveform may be interchangeable with each other.

In some embodiments, "precoding", "precoder", "weight", "precoding weight", "quasi-co-location (QCL)", "Transmission Configuration Indication (TCI) state", "spatial relationship", "spatial domain filter", "transmission power", "phase rotation", "antenna port", "antenna port group", "port group", "layer", "number of layers", "rank", "resource", "resource set", "resource group", "beam", "beam width", "beam angular degree", "antenna", "antenna element", "panel", etc. may be interchangeable with each other.

In some embodiments, terms such as "frame", "radio frame", "subframe", "slot", "sub-slot", "mini-slot", "symbol", "code element", "Transmission Time Interval (TTI)", etc. may be interchangeable with each other.

In some embodiments, "acquire", "obtain", "get", "receive", "transmit", "bidirectional transmission", "send and/or receive" may be interchangeable with each other, which can be interpreted as receiving from other entities, obtaining from protocols, obtaining from higher layers, self-processing, autonomous implementation, and other meanings.

In some embodiments, terms such as "send", "emit", "report", "issue", "transmit", "bidirectional transmission", "send and/or receive" may be interchangeable with each other.

In some embodiments, terms such as "certain", "predetermined", "preset", "set", "indicated", "one", "any", "first", etc. may be interchangeable with each other. Terms such as "specific A", "predetermined A", "preset A", "set A", "indicated A", "a certain A", "any A", "first A" can be interpreted as A predetermined in the protocol or obtained through setting, configuration, or indication, or interpreted as a specific A, a certain A, any A, or the first A, etc., but not limited to this.

In some embodiments, the determination or judgment can be performed using a value represented by one bit (0 or 1), or by a true/false value (Boolean value), or by a numerical comparison (e.g., a comparison with a predetermined value), but are not limited to this.

In some embodiments, "not expecting to receive" can be interpreted as not receiving over time-domain resources and/or frequency-domain resources, or interpreted as not performing subsequent processing on the received data, etc., and "not expecting to send" can be interpreted as not sending, or interpreted as sent but not expecting a response from the receiver.

The wireless sensing method involved in embodiments of the present disclosure can include at least one of steps S2101 to S2107. For example, step S2103 can be implemented as an independent embodiment, step S2104 can be implemented as an independent embodiment, step S2105 can be implemented as an independent embodiment, steps S2101 to S2104 can be implemented as an independent embodiment, and steps S2105 to S2107 can be implemented as an independent embodiment, but are not limited to this.

In some embodiments, steps S2101 to S2103 and steps S2105 to S2107 are optional, and one or more of these steps can be omitted or replaced in different embodiments.

In some embodiments, steps S2102, S2103, and steps S2105 to S2107 are optional, and one or more of these steps can be omitted or replaced in different embodiments.

In some embodiments, one of steps S2105 to S2107, or step S2108 can be performed selectively. In some embodiments, one of steps S2110 and S2111 can be performed selectively. In some embodiments, the execution entity of steps S2105 to S2107 and step S2110 can be, for example, the LMF network element and/or the SMF network element, and the execution entity of steps S2108 and S2111 can be, for example, the base station in the communication system.

In some embodiments, the execution of steps S2105 to S2107, or step S2108, can be determined based on the type of the first information. In some embodiments, the type of the first information can be determined based on the type of the first reference signal. In some embodiments, steps S2110 and S2111 can be determined based on the type of the second information. In some embodiments, the type of the second information can be determined based on the second reference signal.

FIG. 3a is an interactive schematic diagram of a wireless sensing method according to embodiments of the present disclosure. As shown in FIG. 3a, embodiments of the present disclosure relate to the wireless sensing, which are performed by a receiver 101. The method includes following steps.

In step S3101, a first reference signal is obtained.

Optional implementations of step S3101 can be found in the optional implementations of step S2101 in FIG. 2a, as well as other related parts of the embodiments involved in FIG. 2a, which will not be repeated here.

In some embodiments, the receiver 101 receives the first reference signal transmitted by a sensing transmitter, but is not limited to this, the receiver 101 can also receive the first reference signal transmitted by other entities.

In step S3102, a normalized correlation coefficient sample corresponding to a TDT is determined.

In some embodiments, all normalized correlation coefficient samples corresponding to each TDT are determined.

Optional implementations of step S3102 can be found in the optional implementations of step S2102 in FIG. 2a, as well as other related parts of the embodiments involved in FIG. 2a, which will not be repeated here.

In step S3103, a normalized correlation coefficient corresponding to the TDT is determined based on the normalized correlation coefficient sample to obtain first information.

In some embodiments, the normalized correlation coefficient corresponding to each TDT is determined based on all normalized correlation coefficient samples corresponding to each TDT. In some embodiments, the first information includes the normalized correlation coefficient corresponding to each TDT.

Optional implementations of step S3103 can be found in the optional implementations of step S2103 in FIG. 2a, as well as other related parts of the embodiments involved in FIG. 2a, which will not be repeated here.

In step S3104, the first information is sent.

Optional implementations of step S3104 can be found in the optional implementations of step S2104 in FIG. 2a, as well as other related parts of the embodiments involved in FIG. 2a, which will not be repeated here.

In some embodiments, the receiver 101 sends the first information to the network device 102, but is not limited to this, the receiver 101 can also send the first information to other entities.

In step S3105, second information is sent.

Optional implementations of step S3104 can be found in the optional implementations of step S2109 in FIG. 2a, as well as other related parts of the embodiments involved in FIG. 2a, which will not be repeated here.

The wireless sensing method involved in embodiments of the present disclosure can include at least one of steps S3101 to S3104. For example, step S3102 can be implemented as an independent embodiment, step S3104 can be implemented as an independent embodiment, step S3105 can be implemented as an independent embodiment, steps S3102 to S3104 can be implemented as an independent embodiment, and steps S3102 to S3103 can be implemented as an independent embodiment, but are not limited to this.

In some embodiments, steps S3101 to S3103 and step S3105 are optional, and one or more of these steps can be omitted or replaced in different embodiments.

In some embodiments, steps S3101 to S3104 are optional, and one or more of these steps can be omitted or replaced in different embodiments.

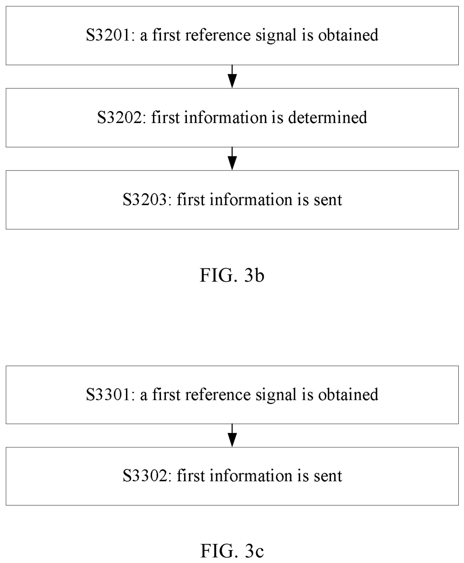

FIG. 3b is an interactive schematic diagram of a wireless sensing method according to embodiments of the present disclosure. As shown in FIG. 3b, embodiments of the present disclosure relate to the wireless sensing, which are performed by a receiver 101. The method includes following steps.

In step S3201, a first reference signal is obtained.

Optional implementations of step S3201 can be found in the optional implementations of step S2101 in FIG. 2a, and step S3101 in FIG. 3a, as well as other related parts of the embodiments involved in FIGS. 2a and 3a, which will not be repeated here.

In step S3202, first information is determined.

Optional implementations of step S3202 can be found in the optional implementations of steps S2102 and S2103 in FIG. 2a, and steps S3102 and S3103 in FIG. 3a, as well as other related parts of the embodiments involved in FIGS. 2a and 3a, which will not be repeated here.

In some embodiments, the first information can be determined based on the first reference signal. In some embodiments, the first information can be directly determined based on the channel frequency response of each resource element occupied by the transmission of the first reference signal.

In some embodiments, the first information can be determined based on normalized correlation coefficient sample(s) corresponding to each TDT. In some embodiments, the normalized correlation coefficient sample(s) can be determined based on the channel frequency response of the resource element pair corresponding thereto.

In step S3203, the first information is sent.

Optional implementations of step S3203 can be found in the optional implementations of step S2104 in FIG. 2a, and step S3104 in FIG. 3a, as well as other related parts of the embodiments involved in FIGS. 2a and 3a, which will not be repeated here.

The wireless sensing method provided in embodiments of the present disclosure can include at least one of steps S3201 to S3203. For example, step S3202 can be implemented as an independent embodiment, step S3203 can be implemented as an independent embodiment, steps S3201 and S3203 can be implemented as an independent embodiment, and steps S3201 to S3202 can be implemented as an independent embodiment, but are not limited to this.

In some embodiments, steps S3201 to S3202 are optional, and one or more of these steps can be omitted or replaced in different embodiments.

In some embodiments, steps S3201 and S3203 are optional, and one or more of these steps can be omitted or replaced in different embodiments.

In some embodiments, step S3202 can be combined with steps S3101, S3104, and S3105 in FIG. 3a, step S3203 can be combined with steps S3101 to S3103, and step S3105 in FIG. 3a, and step S3202 can also be combined with step S2101 and steps S2105 to S2107 in FIG. 2a.

FIG. 3c is an interactive schematic diagram of a wireless sensing method according to embodiments of the present disclosure. As shown in FIG. 3c, embodiments of the present disclosure relate to the wireless sensing, which are performed by a receiver 101. The method includes following steps.

In step S3301, a first reference signal is obtained.

Optional implementations of step S3301 can be found in the optional implementations of step S2101 in FIG. 2a, step S3101 in FIG. 3a, and step S3201 in FIG. 3b, as well as other related parts of the embodiments involved in FIGS. 2a, 3a, and 3b, which will not be repeated here.

In step S3302, first information is sent.

Optional implementations of step S3302 can be found in the optional implementations of step S2104 in FIG. 2a, step S3104 in FIG. 3a, and step S3203 in FIG. 3b, as well as other related parts of the embodiments involved in FIGS. 2a, 3a, and 3b, which will not be repeated here.

In some embodiments, the first information can be determined by the receiver 101. In some embodiments, the first information can be determined based on the first reference signal. In some embodiments, the first information can be determined based on the channel frequency responses of at least two resource elements occupied by the transmission of the first reference signal.

In some embodiments, the first information can be obtained by determining the normalized correlation coefficient corresponding to the TDT. In some embodiments, the first information can include at least one normalized correlation coefficient corresponding to the TDT, such as including the normalized correlation coefficient corresponding to each TDT. In some embodiments, the normalized correlation coefficient can be determined based on the corresponding normalized correlation coefficient samples. In some embodiments, the normalized correlation coefficient samples can be determined based on the channel frequency domain response of the corresponding resource element pairs.

In some embodiments, the first information can be specified by a protocol, or the first information can be obtained by the receiver 101 from the upper layer(s). In some embodiments, the first information can also be determined by other entities and sent to the receiver 101, and embodiments of the present disclosure are not limited to this.

The wireless sensing method involved in embodiments of the present disclosure can include at least one of steps S3301 to S3302. For example, step S3301 can be implemented as an independent implementation, and step S3302 can be implemented as an independent implementation.

In some embodiments, step S3301 is optional, and this step can be omitted or replaced in different embodiments.

In some embodiments, step S3302 can be combined with steps S3101 to S3103 and S3105 in FIG. 3a, step S3302 can be combined with steps S3101 and S3105 in FIG. 3a, step S3302 can be combined with steps S3201 and S3202 in FIG. 3b, and step S3302 can also be combined with steps S2101 and S2105 to S2107 in FIG. 2a.

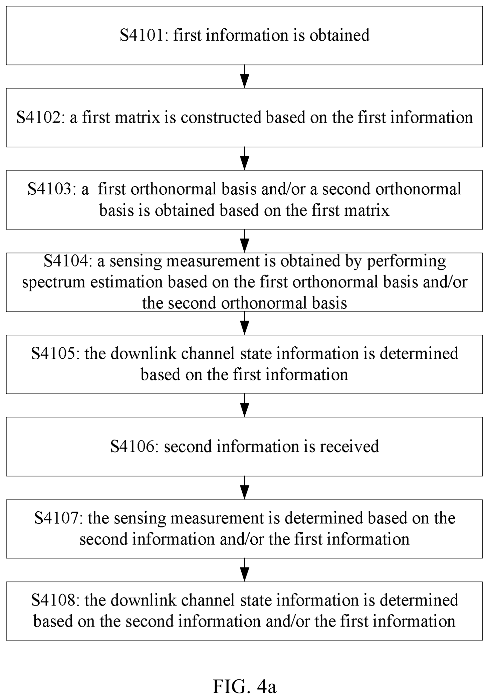

FIG. 4a is an interactive schematic diagram of a wireless sensing method according to embodiments of the present disclosure. As shown in FIG. 4a, embodiments of the present disclosure relate to the wireless sensing, which are performed by a network device 102. The method includes following steps.

In step S4101, first information is obtained.

Optional implementations of step S4101 can be found in the optional implementations of step S2104 in FIG. 2a, step S3104 in FIG. 3a, step S3203 in FIG. 3b, and step S3302 in FIG. 3c, as well as other related parts of the embodiments involved in FIGS. 2a, 3a, 3b, and 3c, which will not be repeated here.

In some embodiments, the network device 102 receives the first information sent by receiver 101, but is not limited to this. The network device 102 can also receive the first information sent by other entities. In some embodiments, the first information can be determined by the receiver 101 based on the received first reference signal.

In some embodiments, the network device 102 obtains the first information specified in a protocol.

In some embodiments, the network device 102 obtains the first information from higher layers.

In some embodiments, the network device 102 processes to obtain the second information.

In some embodiments, the receiver 101 sends the first information.

In step S4102, first matrix is constructed based on the first information.

Optional implementations of step S4102 can be found in the optional implementations of step S2105 in FIG. 2a, as well as other related parts of the embodiments involved in FIGS. 2a, 3a, 3b, and 3c, which will not be repeated here.

In step S4103, first orthonormal basis and/or second orthonormal basis are/is obtained based on the first matrix.

Optional implementations of step S4103 can be found in the optional implementations of step S2106 in FIG. 2a, as well as other related parts of the embodiments involved in FIGS. 2a, 3a, 3b, and 3c, which will not be repeated here.

In step S4104, spectral estimation is performed based on the first orthonormal basis and/or the second orthonormal basis to obtain a sensing measurement.

Optional implementations of step S4104 can be found in the optional implementations of step S2107 in FIG. 2a, as well as other related parts of the embodiments involved in FIGS. 2a, 3a, 3b, and 3c, which will not be repeated here.

In step S4105, downlink channel state information is determined based on the first information.

Optional implementations of step S4105 can be found in the optional implementations of step S2108 in FIG. 2a, as well as other related parts of the embodiments involved in FIGS. 2a, 3a, 3b, and 3c, which will not be repeated here.

In step S4106, second information is received.

Optional implementations of step S4106 can be found in the optional implementations of step S2109 in FIG. 2a, as well as other related parts of the embodiments involved in FIGS. 2a, 3a, 3b, and 3c, which will not be repeated here.

In step S4107, sensing measurement is determined based on the second information and/or the first information.

Optional implementations of step S4107 can be found in the optional implementations of steps S2105 to S2107, and step S2110 in FIG. 2a, as well as other related parts of the embodiments involved in FIGS. 2a, 3a, 3b, and 3c, which will not be repeated here.

In step S4108, downlink channel state information is determined based on the second information and/or the first information.

Optional implementations of step S4108 can be found in the optional implementations of step S2111 in FIG. 2a, as well as other related parts of the embodiments involved in FIGS. 2a, 3a, 3b, and 3c, which will not be repeated here.

The wireless sensing method involved in embodiments of the present disclosure can include at least one of steps S4101 to S4108. For example, step S4101 can be implemented as an independent embodiment, step S4102 can be implemented as an independent embodiment, step S4106 can be implemented as an independent embodiment, steps S4102 to S4104 can be implemented as an independent embodiment, and steps S4105 to S4106 can be implemented as an independent embodiment, but are not limited to this.

In some embodiments, steps S4101 to S4104 and step S4106 are optional, and one or more of these steps can be omitted or replaced in different embodiments.

In some embodiments, steps S4102 to S4106 are optional, and one or more of these steps can be omitted or replaced in different embodiments.

In some embodiments, steps S4101 and steps S4103 to S4104 are optional, and one or more of these steps can be omitted or replaced in different embodiments.

In some embodiments, one of steps S4102 to S4104, or step S4105 can be selectively performed. In some embodiments, one of steps S4102 to S4104, and step S4107 can be selectively performed, and one of steps S4105 and S4108 can be selectively performed.

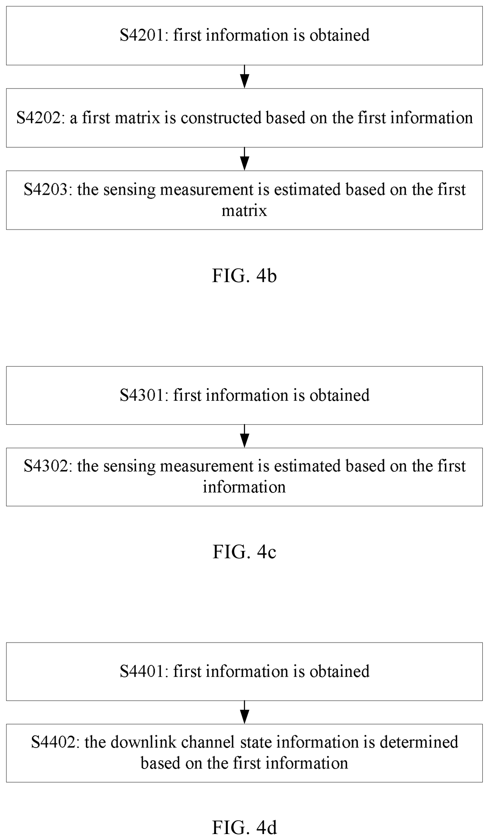

FIG. 4b is an interactive schematic diagram of a wireless sensing method according to embodiments of the present disclosure. As shown in FIG. 4b, embodiments of the present disclosure relate to the wireless sensing, which are performed by a network device 102. The method includes following steps.

In step S4201, first information is obtained.

Optional implementations of step S4201 can be found in the optional implementations of steps S2104 in FIG. 2a, S3104 in FIG. 3a, S3203 in FIG. 3b, S3302 in FIG. 3c, and step S4101 in FIG. 4a, as well as other related parts of the embodiments involved in FIGS. 2a, 3a, 3b, 3c, and 4a, which will not be repeated here.

In step S4202, a first matrix is constructed based on the first information.

Optional implementations of step S4202 can be found in the optional implementations of steps S2105 in FIG. 2a, and S4102 in FIG. 4a, as well as other related parts of the embodiments involved in FIGS. 2a, 3a, 3b, 3c, and 4a, which will not be repeated here.

In step S4203, a sensing measurement is determined based on the first matrix.

Optional implementations of step S4203 can be found in the optional implementations of steps S2106 and S2107 in FIG. 2a, and steps S4103 and S4104 in FIG. 4a, as well as other related parts of the embodiments involved in FIGS. 2a, 3a, 3b, 3c, and 4a, which will not be repeated here.

In some embodiments, the sensing measurement can be determined directly based on the first matrix without determining the orthonormal basis based on the first matrix. In some embodiments, the network device 102 can estimate some sensing measurements without determining the first orthonormal basis and/or the second orthonormal basis, and can directly determine the sensing measurements based on the first matrix. The present disclosure does not limit this.

The wireless sensing method involved in embodiments of the present disclosure can include at least one of steps S4201 to S4203. For example, step S4201, step S4202, and step S4203 can be implemented as an independent embodiment, steps S4202 to S4203 can be implemented as an independent embodiment, and steps S4201 to S4202 can be implemented as an independent embodiment, but are not limited to this.

In some embodiments, steps S4202 to S4203 are optional, and one or more of these steps can be omitted or replaced in different embodiments.

In some embodiments, steps S4201 and S4202 are optional, and one or more of these steps can be omitted or replaced in different embodiments.

In embodiments of the present disclosure, step S4203 can be combined with steps S4101 and S4102 in FIG. 4a, steps S4201 to S4203 can be combined with steps S4106 to S4107 in FIG. 4a, and steps S4201 to S4203 can also be combined with steps S4106 and S4108 in FIG. 4a.

FIG. 4c is an interactive schematic diagram of a wireless sensing method according to embodiments of the present disclosure. As shown in FIG. 4c, embodiments of the present disclosure relate to the wireless sensing, which are performed by a network device 102. The method includes following steps.

In step S4301, first information is obtained.

Optional implementations of step S4301 can be found in the optional implementations of steps S2104 in FIG. 2a, S3104 in FIG. 3a, S3203 in FIG. 3b, S3302 in FIG. 3c, S4101 in FIG. 4a, and S4201 in FIG. 4b, as well as other related parts of the embodiments shown in FIGS. 2a, 3a, 3b, 3c, 4a, and 4b, which will not be repeated here.

In some embodiments, the first information can be sensing information. In some embodiments, the sensing information can be determined by the receiver 101 based on the sensing reference signal.

In step S4302, a sensing measurement is determined based on the first information.

Optional implementations of step S4302 can be found in the optional implementations of steps S2105 to S2107 in FIG. 2a, steps S4102 to S4103 in FIG. 4a, steps S4201 and S4202 in FIG. 4b, as well as other related parts of the embodiments involved in FIGS. 2a, 3a, 3b, 3c, 4a, and 4b, which will not be repeated here.

In some embodiments, the sensing measurement can be estimated directly based on the normalized correlation coefficient corresponding to the at least one TDT included in the first information. For example, orthonormal bases of the signal subspace and the noise subspace are determined respectively based on the normalized correlation coefficient corresponding to each TDT, and the sensing measurement is determined based on the orthonormal bases of the signal subspace and the noise subspace.

The wireless sensing method involved in embodiments of the present disclosure can include at least one of steps S4301 to S4302. For example, step S4301 can be implemented as an independent embodiment, and step S4302 can be implemented as an independent embodiment.

In some embodiments, step S4301 is optional, and this step can be omitted or replaced in different embodiments.

In some embodiments, step S4302 is optional, and this step can be omitted or replaced in different embodiments.

In embodiments of the present disclosure, steps S4301 to S4302 can be combined with steps S4106 to S4107 in FIG. 4a, and steps S4301 to S4302 can also be combined with steps S4106 and S4108 in FIG. 4a.

FIG. 4d is an interactive schematic diagram of a wireless sensing method according to embodiments of the present disclosure. As shown in FIG. 4d, embodiments of the present disclosure relate to the wireless sensing, which are performed by a network device 102. The method includes following steps.

In step S4401, first information is obtained.

Optional implementations of step S4401 can be found in the optional implementations of steps S2104 in FIG. 2a, S3104 in FIG. 3a, S3203 in FIG. 3b, S3302 in FIG. 3c, S4101 in FIG. 4a, and S4201 in FIG. 4b, as well as other related parts of the embodiments involved in FIG. 2a, 3a, 3b, 3c, 4a, and 4b, which will not be repeated here.

In step S4402, downlink channel state information is determined based on the first information.

Optional implementations of step S4402 can be found in the optional implementations of steps S2105 to S2107 in FIG. 2a, steps S4102 to S4103 in FIG. 4a, and steps S4201 and S4202 in FIG. 4b, as well as other related parts of the embodiments involved in FIGS. 2a, 3a, 3b, 3c, 4a, and 4b, which will not be repeated here.

In some embodiments, the first information can be CSI. In some embodiments, the first information is TDCP. In some embodiments, the CSI can be determined by the receiver 101 based on the CSI-RS. In some embodiments, the TDCP can be determined based on TRS.

The wireless sensing method involved in embodiments of the present disclosure can include at least one of steps S4401 to S4402. For example, step S4401 can be implemented as an independent embodiment, and step S4402 can be implemented as an independent embodiment.

In some embodiments, step S4401 is optional, and this step can be omitted or replaced in different embodiments.

In some embodiments, step S4402 is optional, and this step can be omitted or replaced in different embodiments.

In embodiments of the present disclosure, steps S4401 to S4402 can be combined with steps S4106 to S4107 in FIG. 4a, and steps S4401 to S4402 can also be combined with steps S4106 and S4108 in FIG. 4a.

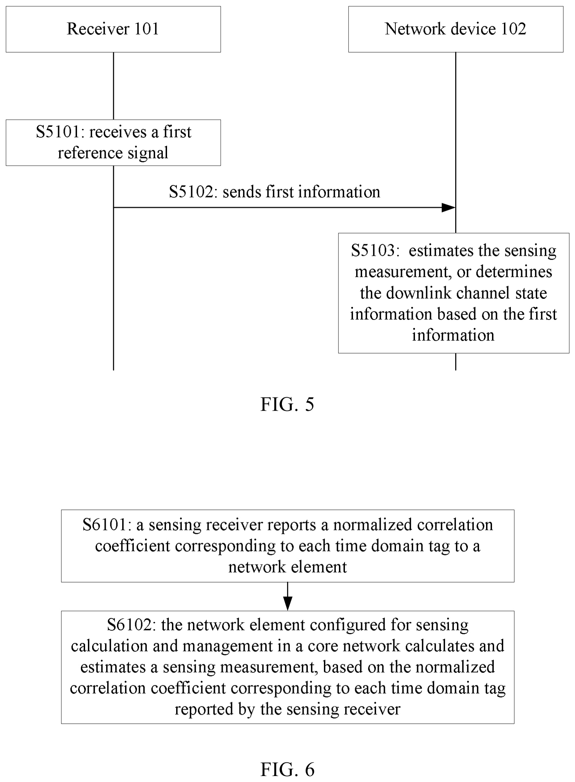

FIG. 5 is an interactive schematic diagram of a wireless sensing method according to embodiments of the present disclosure. As shown in FIG. 5, embodiments of the present disclosure relate to the wireless sensing, which is applied to a communication system 100. The method includes following steps.

In step S5101, the receiver 101 receives a first reference signal.

Optional implementations of step S5101 can be found in the optional implementations of step S2101 in FIG. 2a, step S3101 in FIG. 3a, step S3202 in FIG. 3b, and step S3301 in FIG. 3c, as well as other related parts of the embodiments involved in FIGS. 2a, 3a, 3b, 3c, 4a, 4b, 4c, and 4d, which will not be repeated here.

In step S5102, the receiver 101 sends first information.

Optional implementations of step S5102 can be found in the optional implementations of steps S2104 in FIG. 2a, S3104 in FIG. 3a, S3203 in FIG. 3b, S3302 in FIG. 3c, S4101 in FIG. 4a, S4201 in FIG. 4b, S4301 in FIG. 4c, and S4401 in FIG. 4d, as well as other related parts of the embodiments involved in FIGS. 2a, 3a, 3b, 3c, 4a, 4b, 4c, and 4d, which will not be repeated here.

In step S5103, the network device 102 determines a sensing measurement based on the first information, or determines downlink channel state information based on the first information.

Optional implementations of step S5103 can be found in the optional implementations of steps S2105 to S2107 and S2108 in FIG. 2a, steps S4102 to S4104 and S4105 in FIG. 4a, steps S4202 to S4203 in FIG. 4b, and steps S4302 and S4402 in FIG. 4c, as well as other related parts of the embodiments involved in FIGS. 2a, 3a, 3b, 3c, 4a, 4b, 4c, and 4d, which will not be repeated here.

FIG. 6 is a flowchart of a wireless sensing method according to embodiments of the present disclosure. As shown in FIG. 6, embodiments of the present disclosure relate to a wireless sensing method, and the method includes following steps.

In step S6101, the sensing receiver reports a normalized correlation coefficient corresponding to each time domain tag to a network element (such as LMF, SMF, etc.) configured for sensing calculation and management in a core network.

The time domain tag (TDT) is a positive integer describing a distance in the time domain between a pair of resource elements corresponding to a sensing reference signal.

Without loss of generality, the OFDM symbol positions of the sensing reference signal are denoted as a set $\mathcal{L}$.

Then, the sensing receiver can calculate the a TDT set $\mathcal{T}$, $\mathcal{T} = \{\ell_i - \ell_j \mid \ell_i > \ell_j; \ell_i, \ell_j \in \mathcal{L}\}$, based on set $\mathcal{L}$.

The sensing receiver calculates a time-domain channel normalized correlation coefficient for each TDT, denoted as a set

$$\mathcal{C} = \left\{ c_t \triangleq \mathbb{E}\left[ \frac{H_\ell H_{\ell+t}^*}{|H_\ell| \cdot |H_{\ell+t}|} \right] \mid \ell \in \mathcal{L}, t \in \mathcal{T}, \ell + t \in \mathcal{L} \right\},$$

wherein, $H_\ell$ represents the channel frequency response (CFR) of a subcarrier across an OFDM symbol $\ell$, $\ell \in \mathcal{L}$; $\mathbb{E}[\cdot]$ is a mathematical expectation operator, representing a statistical average of multiple time-domain channel normalized correlation coefficient samples corresponding to the same TDT. The multiple time-domain channel normalized correlation coefficient samples corresponding to the same TDT include at least one of the following:

normalized correlation coefficients for the channel frequency responses of multiple OFDM symbol pairs corresponding to the same TDT;
normalized correlation coefficients for the channel frequency responses of different transmit/receive antenna pairs or antenna port pairs corresponding to the same TDT; or
normalized correlation coefficients for the channel frequency responses corresponding to sensing reference signals transmitted across different subcarriers.

In some embodiments, in order to avoid confusion, the normalized correlation coefficients (i.e., the elements in the set $\mathcal{C}$) for the channel frequency responses should be reported in an ordered (sequential) manner, for example, reported in an ascending or descending order according to the corresponding TDTs.

In step S6102, the network element (such as LMF, SMF, etc.) configured for sensing calculation and management in the core network calculates and estimates a sensing measurement (such as a Doppler frequency, a velocity, a motion direction, etc.), based on the normalized correlation coefficient corresponding to each time domain tag reported by the sensing receiver.

Based on the reported time-domain channel normalized correlation coefficients, i.e., $\mathcal{C} = \{c_{t_1}, c_{t_2}, ..., c_{t_{|\mathcal{T}|-1}}, c_{t_{|\mathcal{T}|}}\}$, the network element (such as LMF, SMF, etc.) configured for sensing calculation and management in the core network constructs the Hermitian Toeplitz matrix **R** as follows:

$$\mathbf{R} \triangleq \begin{bmatrix} 1 & c_{t_1}^* & \cdots & c_{t_{|\mathcal{T}|-1}}^* & c_{t_{|\mathcal{T}|}}^* \\ c_{t_1} & 1 & \cdots & c_{t_{|\mathcal{T}|-2}} & c_{t_{|\mathcal{T}|-1}} \\ \vdots & \vdots & \ddots & \vdots & \vdots \\ c_{t_{|\mathcal{T}|-1}} & c_{t_{|\mathcal{T}|-2}} & \cdots & 1 & c_{t_1}^* \\ c_{t_{|\mathcal{T}|}} & c_{t_{|\mathcal{T}|-1}} & \cdots & c_{t_1} & 1 \end{bmatrix},$$

where $0 < t_1 < t_2 < \cdots < t_{|\mathcal{T}|-1} < t_{|\mathcal{T}|}$, and $|\mathcal{T}|$ represent the number of elements in the set.

Assuming that the network element (such as LMF, SMF, etc.) configured for sensing calculation and management employs the Multiple Signal Classification (MUSIC) spectrum estimation algorithm, then an orthonormal basis $\mathbf{U}_n$ of the noise subspace can be obtained by performing the eigenvalue decomposition (EVD) on the matrix **R**, i.e.,

$$\mathbf{R} = [\mathbf{U}_s \quad \mathbf{U}_n] \begin{bmatrix} \mathbf{\Lambda}_s & \\ & \mathbf{\Lambda}_n \end{bmatrix} \begin{bmatrix} \mathbf{U}_s^H \\ \mathbf{U}_n^H \end{bmatrix},$$

where $\mathbf{U}_s$ and $\mathbf{U}_n$ are orthonormal bases of the signal subspace and the noise subspace, respectively, and $\mathbf{\Lambda}_s$ and $\mathbf{\Lambda}_n$ are the corresponding eigenvalues.

Then, the network element (such as LMF, SMF, etc.) configured for sensing calculation and management can perform the spectrum estimation. Taking the MUSIC spectrum estimation as an example, the MUSIC measurement can be expressed as:

$$P(f) = \frac{1}{\mathbf{v}^H(f)\mathbf{U}_n\mathbf{U}_n^H\mathbf{v}(f)},$$

where $v(f) = [1\ e^{j2\pi ft_1\Delta}\ e^{j2\pi ft_2\Delta}\ e^{j2\pi ft_3\Delta}\ ...\ e^{j2\pi ft_{|\mathcal{T}|}\Delta}]^T$ is a scan vector with the Doppler frequency of $f$, $\Delta$ represents a length of an OFDM symbol, $t_x$ represents a value of an $x^{th}$ TDT in the at least one TDT, x=1, 2, ..., $|\mathcal{T}|$, where $|\mathcal{T}|$ is the number of the at least one TDT.

It can be understood that the above methods primarily involve reporting sensing data, and in some embodiments, can be extended to reporting Channel State Information (CSI).

In some embodiments, in a sensing system, the sensing receiver receives and measures a sensing reference signal transmitted by the sensing transmitter, and reports the sensing information, such as first information, to the network device such as LMF or SMF. The network device then calculates the sensing measurement based on such information.

In a communication system, the user equipment or the terminal receives and measures the CSI-RS or TRS transmitted by the base station, and reports the CSI or TDCP to the base station. The base station then calculates downlink channel state information, such as time-domain precoding information, based on such information.

In some embodiments, the specific correspondence between the communication system and the sensing system can be as follows:

   optionally, the sensing transmitter in the sensing system can be equivalent to the base station in the communication system;
   optionally, the sensing receiver in the sensing system can be equivalent to the user equipment in the communication system;
   optionally, the sensing reference signal in the sensing system can be equivalent to the CSI-RS or the Tracking Reference Signal (TRS) in the communication system;
   optionally, that the sensing receiver reports sensing information to the network device such as LMF or SMF in the sensing system is equivalent to that the user equipment reports CSI or TDCP to the base station in the communication system.

In embodiments of the present disclosure, some or all steps, and their optional implementations, can be arbitrarily combined with some or all steps in other embodiments, and can also be arbitrarily combined with optional implementations of other embodiments.

The embodiments of the present disclosure also provide a device for implementing any of the above methods. For example, a device is provided, which includes units for implementing the steps performed by the terminal in any of the above methods. In addition, another device is provided, including units for implementing the steps performed by the network device (e.g., receiver, transmitter, sensing target, access network device, core network functional node, core network device, etc.) in any of the above methods.

It should be understood that the division of the units in the above device is only a logical functional division. In actual implementations, they can be fully or partially integrated into a single physical entity, or they can be physically separated. In addition, the units in the device can be implemented by a processor calling software. For example, the device includes a processor connected to a memory containing computer instructions. The processor calls the computer instructions stored in the memory to implement any of the above methods or to implement the functions of the units in the above device. The processor can be, for example, a general-purpose processor, such as a central processing unit (CPU) or a microprocessor, and the memory can be internal or external to the device. Alternatively, the units in the device can be implemented as hardware circuits. The functions of some or all units can be achieved through the design of these hardware circuits, which can be understood as one or more processors. For example, in one implementation, the hardware circuit is an application-specific integrated circuit (ASIC). The functions of some or all of the units are achieved through the design of the logical relationships between the components within the circuit. In another implementation, the hardware circuit can be implemented using a programmable logic device (PLD). Taking a Field Programmable Gate Array (FPGA) as an example, it can include a large number of logic gates. The connection relationships between the logic gates are configured through a configuration file, thereby achieving the functions of some or all of the units. All units of the above device can be implemented entirely through processor-called software, entirely through hardware circuits, or partially through processor-called software with the remaining parts implemented through hardware circuits.

In the present disclosure, the processor is a circuit with signal processing capabilities. In one implementation, the processor can be a circuit with instruction read and execute capabilities, such as a central processing unit (CPU), microprocessor, graphics processing unit (GPU) (which can be understood as a type of microprocessor), or digital signal processor (DSP). In another implementation, the processor can implement certain functions through the logical relationships of hardware circuits. These logical relationships are fixed or reconfigurable. For example, the processor is a hardware circuit implemented using an application-specific integrated circuit (ASIC) or a programmable logic device (PLD), such as an FPGA. In a reconfigurable hardware circuit, the process of the processor loading a configuration document and configuring the hardware circuit can be understood as the processor loading instructions to implement the functions of some or all of the above units. In addition, it can also be a hardware circuit designed for artificial intelligence, which can be understood as an ASIC, such as a neural network processing unit (NPU), tensor processing unit (TPU), or deep learning processing unit (DPU).

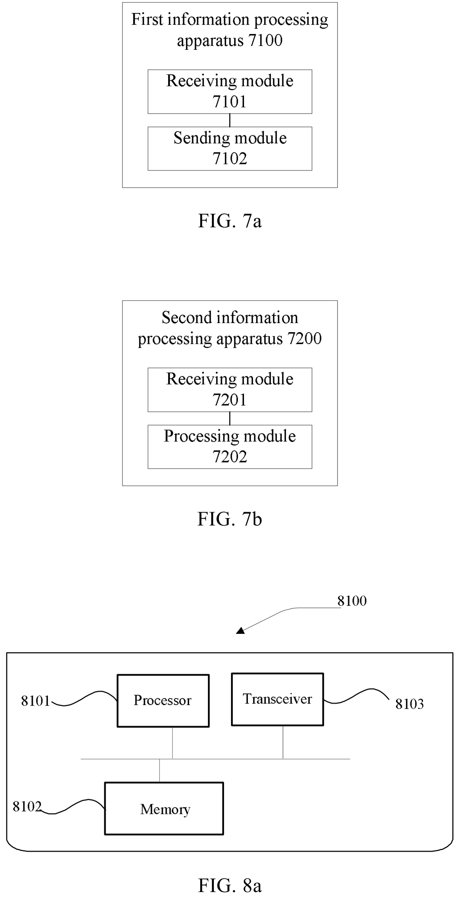

FIG. 7a is a schematic diagram of a structure of a first information processing apparatus according to embodiments of the present disclosure. As shown in FIG. 7a, the first information processing apparatus 7100 includes a receiving module 7101 and a sending module 7102.

The receiving module 7101 is configured to receive a first reference signal, the first reference signal being transmitted occupying at least two resource elements, and the resource elements being distributed across at least two Orthogonal Frequency Division Multiplexing (OFDM) symbols.

The sending module 7102 is configured to send first information, the first information including a normalized correlation coefficient corresponding to at least one time domain tag (TDT), the TDT being configured to indicate a time domain distance between a pair of resource elements, and the first information being used for a network device to determine a sensing measurement, or the first information being used for the network device to determine downlink channel state information.

In some embodiments, the receiving module 7101 is configured to execute steps related to the reception of the first reference signal executed by the sensing receiver in any of the methods described above, which will not be elaborated here. In some embodiments, the sending module 7102 is configured to execute steps related to the transmission of the first information executed by the sensing receiver in any of the methods described above, which will not be elaborated here. In some embodiments, the first information processing apparatus 7100 further includes a determination module, which is configured to execute steps related to the information determination executed by the sensing receiver in any of the methods described above, such as the determination of the first information and the second information, which will not be elaborated here.

FIG. 7b is a schematic diagram of a structure of the second information processing apparatus according to embodiments of the present disclosure. As shown in FIG. 7b, the second information processing apparatus 7200 includes a receiving module 7201 and a processing module 7202.

The receiving module 7201 is configured to receive first information, the first information including a normalized correlation coefficient corresponding to at least one time domain tag (TDT), the TDT being configured to indicate a time domain distance between a pair of resource elements, a first reference signal being transmitted occupying at least two resource elements, and the resource elements being distributed across at least two Orthogonal Frequency Division Multiplexing (OFDM) symbols.

The processing module 7202 is configured to determine a sensing measurement based on the first information, or determine downlink channel state information based on the first information.

In some embodiments, the receiving module 7201 is configured to perform steps related to the reception of the information executed by the network device in any of the methods described above, which will not be elaborated here. In some embodiments, the processing module 7202 is configured to execute steps related to the information processing executed by the network device in any of the methods described above, which will not be elaborated here. The second information processing apparatus 7200 further includes a sending module, which is configured to execute steps related to the transmission of the information executed by the network device in any of the methods described above, which will not be elaborated here.

In some embodiments, the receiving module 7201 is configured to perform steps related to the reception of the information executed by the network device in any of the methods described above, which will not be elaborated here. In some embodiments, the processing module 7202 is configured to execute steps related to the information processing executed by the network device in any of the methods described above, which will not be elaborated here. The second information processing apparatus 7200 further includes a sending module, which is configured to execute steps related to the transmission of the information executed by the network device in any of the methods described above, which will not be elaborated here.

FIG. 8a is a schematic diagram of a structure of a communication device 8100 according to embodiments of the present disclosure. The communication device 8100 can be a network device (e.g., access network device, core network device, etc.), a terminal (e.g., user equipment, etc.), a chip, a chip system, or a processor that supports the network device in implementing any of the above methods, or a chip, a chip system, or a processor that supports the terminal in implementing any of the above methods. The communication device 8100 can be configured to implement the methods described in the above method embodiments. For details, please refer to the descriptions in the above method embodiments.

As shown in FIG. 8a, the communication device 8100 includes one or more processors 8101. The processor 8101 can be a general-purpose processor or an application-specific processor, such as a baseband processor or a central processing unit (CPU). The baseband processor can be used to process communication protocols and communication data, while the CPU can be used to control the communication device (e.g., base station, baseband chip, terminal device, terminal device chip, DU or CU, etc.), execute programs, and process program data. The processor 8101 is configured to call instructions to cause the communication device 8100 to perform any of the above methods.

In some embodiments, the communication device 8100 further includes one or more memories 8102 for storing instructions. In some embodiments, all or part of the memories 8102 can be located outside the communication device 8100.

In some embodiments, the communication device 8100 further includes one or more transceivers 8103. When the communication device 8100 includes one or more transceivers 8103, the communication steps such as transmitting and receiving in the above methods are performed by the transceiver 8103, and other steps are performed by the processor 8101.

In some embodiments, the transceiver can include a receiver and a transmitter, which can be separated or integrated. In some embodiments, terms such as "transceiver", "transceiver unit", "transceiver machine", "transceiver circuit", etc., can be used interchangeably. Terms such as "transmitter", "transmitting unit", "transmitting machine", "transmitting circuit", etc., can be used interchangeably. Terms such as "receiver", "receiving unit", "receiving machine", "receiving circuit", etc., can be used interchangeably.

In some embodiments, the communication device 8100 further includes one or more interface circuits 8104. The interface circuits 8104 are connected to the memory 8102 and can be used to receive signals from the memory 8102 or other devices, and to send signals to the memory 8102 or other devices. For example, the interface circuit 8104 can read instructions stored in the memory 8102 and send those instructions to the processor 8101.

The communication device 8100 described in the above embodiments can be a network device or a terminal, but the scope of the communication device 8100 described in the present disclosure is not limited to this, and the structure of the communication device 8100 is not limited to FIG. 8a. The communication device can be a standalone device or part of a large device. For example, the communication device can be: (1) a standalone integrated circuit (IC), a chip, a chip system, or a subsystem; (2) a collection of one or more ICs, optionally, including storage components for storing data and programs; (3) an ASIC, such as a modem; (4) a module that can be embedded in other devices; (5) a receiver, a terminal device, a smart terminal device, a cellular phone, a wireless device, a handheld device, a mobile unit, a vehicle-mounted device, a network device, a cloud device, a artificial intelligence device, etc., and (6) other devices, etc.

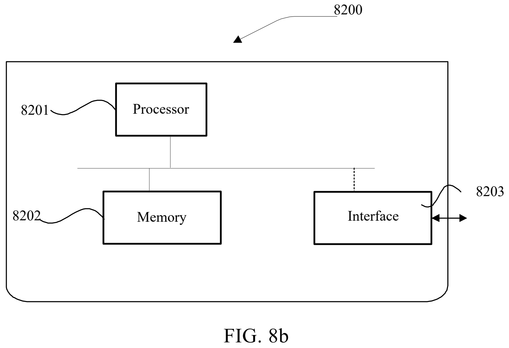

FIG. 8b is a schematic diagram of a structure of a chip 8200 according to embodiments of the present disclosure. For cases where the communication device 8100 can be a chip or a chip system, the reference can be made to the schematic diagram of the structure of the chip 8200 shown in FIG. 8b, but it is not limited to this.

The chip 8200 includes one or more processors 8201, which are configured to call instructions to cause the chip 8200 to perform any of the above methods.

In some embodiments, the chip 8200 further includes one or more interface circuits 8202 connected to the memory 8203. The interface circuits 8202 can be used to receive signals from the memory 8203 or other devices, and can also be used to send signals to the memory 8203 or other devices. For example, the interface circuit 8202 can read instructions stored in the memory 8203 and send those instructions to the processor 8201. In some embodiments, terms such as "interface circuit", "interface", "transceiver pin", "transceiver", etc., can be used interchangeably.

In some embodiments, the chip 8200 further includes one or more memories 8203 for storing instructions. In some embodiments, all or part of the memories 8203 can be located outside of the chip 8200.

The present disclosure also provides a storage medium storing instructions. When the instructions are executed on the communication device 8100, the communication device 8100 is caused to perform any of the above methods. In some embodiments, the storage medium is an electronic storage medium. In some embodiments, the storage medium is a computer-readable storage medium, but is not limited to this. The storage medium can also be a storage medium readable by other devices. In some embodiments, the above storage medium can be a non-transitory storage medium, but is not limited to this. The storage medium can also be a temporary storage medium.

The present disclosure also provides a program product. When the program product is executed by the communication device 8100, the communication device 8100 is caused to perform any of the above methods. In some embodiments, the above program product is a computer program product.

The present disclosure also provides a computer program. When the computer program runs on a computer, the computer is caused to perform any of the above methods.

**Claims**

1.  An information processing method, performed by a receiver, the method comprising:

    receiving a first reference signal, wherein the first reference signal is transmitted occupying at least two resource elements, and the resource elements are distributed across at least two Orthogonal Frequency Division Multiplexing (OFDM) symbols; and
    sending first information, wherein the first information comprises a normalized correlation coefficient corresponding to at least one time domain tag (TDT), the TDT is configured to indicate a time domain distance between a pair of resource elements, and the first information is used for a network device to determine a sensing measurement, or the first information is used for the network device to determine downlink channel state information.

2.  The method according to claim 1, the method comprising:

    determining at least one normalized correlation coefficient sample corresponding to a first TDT; and
    determining the normalized correlation coefficient corresponding to the first TDT based on the at least one normalized correlation coefficient sample.

3.  The method according to claim 2, wherein determining the at least one normalized correlation coefficient sample corresponding to the first TDT, comprises:
    determining a normalized correlation coefficient sample corresponding to a first resource element pair based on channel frequency responses of two resource elements in the first resource element pair, wherein the first resource element pair is any resource element pair corresponding to the first TDT.

4.  The method according to claim 3, wherein the resource element pair corresponding to the first TDT comprises at least one of:

    the resource element pair consisting of two resource elements distributed across different OFDM symbols;
    at least two resource element pairs used by different transmit/receive antenna pairs;
    at least two resource element pairs used by different transmit/receive antenna port pairs; or
    at least two resource element pairs distributed across different subcarriers.

5.  The method according to any of claims 1 to 4, the method comprising:

    determining an update to the normalized correlation coefficient corresponding to a second TDT among the normalized correlation coefficient corresponding to the at least one TDT; and
    sending second information, wherein the second information comprises an updated normalized correlation coefficient corresponding to the second TDT.

6.  The method according to any of claims 1 to 5, wherein the pair of resource elements indicated by the TDT are resource elements across the same subcarrier.

7.  The method according to any of claims 1 to 6, wherein the at least one TDT comprises each TDT in a set of TDTs, and the set of TDTs is determined based on a set of OFDM symbol positions of the resource elements.

8.  The method according to any of claims 1 to 7, wherein normalized correlation coefficients corresponding to the at least one TDT are arranged in a specific sequence.

9.  The method according to any of claims 1 to 8, wherein the TDT is determined based on a number of OFDM symbols between the pair of resource elements.

10. The method according to any of claims 1 to 9, wherein the network device comprises at least one of a Location Management Function (LMF) network element, a Sensing Management Function (SMF) network element, or a base station.

11. The method according to any of claims 1 to 10, wherein the first reference signal is a Channel State Information Reference Signal (CSI-RS), and the first information is Channel State Information (CSI); or

the first reference signal is a Tracking Reference Signal (TRS), and the first information is Time Domain Channel Properties (TDCP); or

the first reference signal is a sensing reference signal, and the first information is sensing information.

12. An information processing method, performed by a network device, the method comprising:

receiving first information, wherein the first information comprises a normalized correlation coefficient corresponding to at least one time domain tag (TDT), the TDT is configured to indicate a time domain distance between a pair of resource elements, a first reference signal is transmitted occupying at least two resource elements, and the resource elements are distributed across at least two Orthogonal Frequency Division Multiplexing (OFDM) symbols; and

determining a sensing measurement based on the first information, or determining downlink channel state information based on the first information.

13. The method according to claim 12, wherein determining the sensing measurement based on the first information, comprises:

constructing a first matrix based on the normalized correlation coefficient corresponding to the at least one TDT; and

determining the sensing measurement based on the first matrix.

14. The method according to claim 13, wherein determining the sensing measurement based on the first matrix, comprises:

determining, based on the first matrix, an orthonormal basis of a noise subspace as a first orthonormal basis, and/or an orthonormal basis of a signal subspace as a second orthonormal basis; and

obtaining the sensing measurement by performing spectrum estimation based on the first orthonormal basis and/or the second orthonormal basis.

15. The method according to claim 14, wherein determining, based on the first matrix, the orthonormal basis of the noise subspace as the first orthonormal basis, and/or the orthonormal basis of the signal subspace as the second orthonormal basis, comprises:

obtaining the first orthonormal basis and/or the second orthonormal basis by performing eigenvalue decomposition on the first matrix.

16. The method according to any of claims 14 to 15, wherein the sensing measurement is a Multiple Signal Classification (MUSIC) measurement.

17. The method according to claim 16, wherein the MUSIC measurement is expressed as:

$$P(f) = \frac{1}{\mathbf{v}^H(f)\mathbf{U}_n\mathbf{U}_n^H\mathbf{v}(f)};$$

where $\mathbf{v}(f) = [1 \ e^{j2\pi f t_1 \Delta} \ e^{j2\pi f t_2 \Delta} \ e^{j2\pi f t_3 \Delta} \ ... \ e^{j2\pi f t_{|\mathcal{T}|}\Delta}]^T$, $P(f)$ represents a MUSIC measurement value with a Doppler frequency of $f$, $\mathbf{v}(f)$ represents a scan vector with the Doppler frequency of $f$, $\Delta$ represents a length of the OFDM symbol, $t_x$ represents a value of an $x^{th}$ TDT in the at least one TDT, a superscript T denotes matrix transpose, a superscript H denotes matrix conjugate transpose, $j$ is an imaginary unit, i.e., the square root of -1, $\mathbf{U}_n$ is the first orthonormal basis, and $\mathbf{U}_s$ is the second orthonormal basis.

18. The method according to any of claims 12 to 17, wherein the pair of resource elements indicated by the TDT are resource elements across the same subcarrier.

19. The method according to any of claims 12 to 18, wherein the first matrix is a Hermitian Toeplitz matrix.

20. The method according to any of claims 12 to 19, wherein the at least one TDT comprises each TDT in a set of TDTs, and the set of TDTs is determined based on a set of OFDM symbol positions of the resource elements.

21. The method according to any of claims 12 to 20, wherein normalized correlation coefficients corresponding to the at least one TDT are arranged in a specific sequence.

22. The method according to any of claims 12 to 21, wherein the TDT is determined based on a number of OFDM symbols between the pair of resource elements.

23. The method according to any of claims 12 to 22, wherein the network device comprises at least one of a Location Management Function (LMF) network element, a Sensing Management Function (SMF) network element, or a base station.

24. The method according to any of claims 12 to 23, wherein the first reference signal is a Channel State Information Reference Signal (CSI-RS), and the first information is Channel State Information (CSI); or

   the first reference signal is a Tracking Reference Signal (TRS), and the first information is Time Domain Channel Properties (TDCP); or
   the first reference signal is a sensing reference signal, and the first information is sensing information.

25. An information processing method, applied to a communication system, the communication system comprising a receiver and a network device, the method comprising:

   receiving, by the receiver, a first reference signal, wherein the first reference signal is transmitted occupying at least two resource elements, and the resource elements are distributed across at least two Orthogonal Frequency Division Multiplexing (OFDM) symbols;
   sending, by the receiver, wherein the first information comprises a normalized correlation coefficient corresponding to at least one time domain tag (TDT), and the TDT is configured to indicate a time domain distance between a pair of resource elements; and
   determining, by the network device, a sensing measurement based on the first information, or downlink channel state information based on the first information.

26. A first information processing apparatus, comprising:

   a receiving module configured to receive a first reference signal, wherein the first reference signal is transmitted occupying at least two resource elements, and the resource elements are distributed across at least two Orthogonal Frequency Division Multiplexing (OFDM) symbols; and
   a sending module configured to send first information, wherein the first information comprises a normalized correlation coefficient corresponding to at least one time domain tag (TDT), the TDT is configured to indicate a time domain distance between a pair of resource elements, and the first information is used for a network device to determine a sensing measurement, or the first information is used for the network device to determine downlink channel state information.

27. A second information processing apparatus, comprising:

   a receiving module configured to receive first information, wherein the first information comprises a normalized correlation coefficient corresponding to at least one time domain tag (TDT), the TDT is configured to indicate a time domain distance between a pair of resource elements, a first reference signal is transmitted occupying at least two resource elements, and the resource elements are distributed across at least two Orthogonal Frequency Division Multiplexing (OFDM) symbols; and
   a processing module configured to determine a sensing measurement based on the first information, or determine downlink channel state information based on the first information.

28. A communication device, comprising:

   one or more processors;
   wherein the one or more processors are configured to call computer instructions to cause the communication device to perform the information processing method according to any of claims 1 to 11 or the information processing method according to any of claims 12 to 24.

29. A communication system, comprising a receiver and a network device, wherein the receiver is configured to perform the information processing method according to any of claims 1 to 11, and the network device is configured to perform the information processing method according to any of claims 12 to 24.

30. A storage medium having instructions stored thereon, which when executed on a communication device, cause the communication device to perform the information processing method according to any of claims 1 to 11 or the information processing method according to any of claims 12 to 24.

Communication system 100

| Receiver 101 | Network device 102 |

FIG. 1

Receiver 101

Network device 102

S2101: receives a first reference signal
(e.g., CSI-RS or sensing reference signal)

S2102: determines a normalized correlation
coefficient sample corresponding to a TDT

S2103: determines the normalized
correlation coefficient corresponding to the
TDT based on the normalized correlation
coefficient sample, to obtain the first
information

S2104: sends first information
（e.g., sensing information）

S2105: constructs a first matrix based on
the first information

S2106: obtains a first orthonormal basis
and/or a second orthonormal basis based on
the first matrix

S2107: obtains a sensing measurement by
performing spectrum estimation based on
the first orthonormal basis and/or the
second orthonormal basis

S2108: determines the downlink channel
state information based on the first
information

S2109: sends second information

S2110: determines the sensing
measurement based on the second
information and/or the first information

S2111: determines the downlink channel
state information based on the second
information and/or the first information

FIG. 2a

FIG. 2b

S3101: a first reference signal is obtained

S3102: a normalized correlation coefficient sample corresponding to a TDT is determined

S3103: a normalized correlation coefficient corresponding to the TDT is determined based on the normalized correlation coefficient sample to obtain first information

S3104: first information is sent

S3105: second information is sent

FIG. 3a

S3201: a first reference signal is obtained

S3202: first information is determined

S3203: first information is sent

FIG. 3b

S3301: a first reference signal is obtained

S3302: first information is sent

FIG. 3c

S4101: first information is obtained

↓

S4102: a first matrix is constructed based on the first information

↓

S4103: a  first orthonormal basis and/or a second orthonormal basis is obtained based on the first matrix

↓

S4104: a sensing measurement is obtained by performing spectrum estimation based on the first orthonormal basis and/or the second orthonormal basis

↓

S4105: the downlink channel state information is determined based on the first information

↓

S4106: second information is received

↓

S4107: the sensing measurement is determined based on the second information and/or the first information

↓

S4108: the downlink channel state information is determined based on the second information and/or the first information

FIG. 4a

| S4201: first information is obtained |
|---|

↓

| S4202: a first matrix is constructed based on the first information |
|---|

↓

| S4203: the sensing measurement is estimated based on the first matrix |
|---|

FIG. 4b

| S4301: first information is obtained |
|---|

↓

| S4302: the sensing measurement is estimated based on the first information |
|---|

FIG. 4c

| S4401: first information is obtained |
|---|

↓

| S4402: the downlink channel state information is determined based on the first information |
|---|

FIG. 4d

```
┌─────────────────────┐                    ┌─────────────────────┐
│    Receiver 101     │                    │  Network device 102 │
└──────────┬──────────┘                    └──────────┬──────────┘
           │                                          │
  ┌────────┴─────────┐                                │
  │ S5101: receives a first │                         │
  │  reference signal │                               │
  └────────┬─────────┘                                │
           │    S5102: sends first information         │
           │─────────────────────────────────────────▶│
           │                                          │
           │                         ┌────────────────┴────────────────┐
           │                         │ S5103: estimates the sensing    │
           │                         │ measurement, or determines      │
           │                         │ the downlink channel state      │
           │                         │ information based on the first  │
           │                         │ information                     │
           │                         └────────────────┬────────────────┘
           │                                          │
```

FIG. 5

```
┌──────────────────────────────────────────────────────────┐
│ S6101: a sensing receiver reports a normalized correlation │
│ coefficient corresponding to each time domain tag to a     │
│ network element                                            │
└─────────────────────────┬────────────────────────────────┘
                          │
                          ▼
┌──────────────────────────────────────────────────────────┐
│ S6102: the network element configured for sensing          │
│ calculation and management in a core network calculates and│
│ estimates a sensing measurement, based on the normalized    │
│ correlation coefficient corresponding to each time domain tag│
│ reported by the sensing receiver                           │
└──────────────────────────────────────────────────────────┘
```

FIG. 6

First information processing
apparatus 7100

Receiving module
7101

Sending module
7102

FIG. 7a

Second information
processing apparatus 7200

Receiving module
7201

Processing module
7202

FIG. 7b

8100

8101 Processor

Transceiver 8103

8102 Memory

FIG. 8a

8200

8201 Processor

8202 Memory

Interface 8203

FIG. 8b

## INTERNATIONAL SEARCH REPORT

| International application No. |
| --- |
| **PCT/CN2023/094072** |

| A. | CLASSIFICATION OF SUBJECT MATTER |
| --- | --- |

H04W72/0453(2023.01)i; H04B17/382(2015.01)i

According to International Patent Classification (IPC) or to both national classification and IPC

| B. | FIELDS SEARCHED |
| --- | --- |

Minimum documentation searched (classification system followed by classification symbols)

IPC: H04W H04B

Documentation searched other than minimum documentation to the extent that such documents are included in the fields searched

Electronic data base consulted during the international search (name of data base and, where practicable, search terms used)

CNTXT: ENTXTC; DWPI; CNKI; 3GPP: 参考信号, 资源粒子, 资源单元, 资源元素, 频分复用, 时域标签, 时域距离, 感知, 度量, 归一化, 信道状态, 下行, 样本, RS, RE, resource element, OFDM, timedomain tag, timedomain distance, sensing, metrics, normalization, channel state, downlink, DL, samples

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 115118402 A (HUAWEI TECHNOLOGIES CO., LTD.) 27 September 2022 (2022-09-27) description, paragraph [0004] | 1-30 |
| A | CN 115134844 A (HUAWEI TECHNOLOGIES CO., LTD.) 30 September 2022 (2022-09-30) entire document | 1-30 |
| A | CN 115696371 A (VIVO MOBILE COMMUNICATION CO., LTD.) 03 February 2023 (2023-02-03) entire document | 1-30 |
| A | CN 115765942 A (HUAWEI TECHNOLOGIES CO., LTD.) 07 March 2023 (2023-03-07) entire document | 1-30 |
| A | US 2023014777 A1 (VIVO MOBILE COMMUNICATION CO., LTD.) 19 January 2023 (2023-01-19) entire document | 1-30 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 November 2023** | **05 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/094072**

**C.    DOCUMENTS CONSIDERED TO BE RELEVANT**

| Category* | Citation of document, with indication, where appropriate, of the relevant passages | Relevant to claim No. |
|---|---|---|
| A | ZTE. "Channel Sensing Based Schemes for Cross-Link Interference Mitigation in NR" *3GPP TSG RAN WG1 NR Ad-Hoc#2, R1-1710129,* No. TSGR1_AH, 30 June 2017 (2017-06-30), entire document | 1-30 |

Form PCT/ISA/210 (second sheet) (July 2022)

**INTERNATIONAL SEARCH REPORT**
Information on patent family members

International application No.

**PCT/CN2023/094072**

| Patent document cited in search report | | | Publication date (day/month/year) | Patent family member(s) | | | Publication date (day/month/year) |
|---|---|---|---|---|---|---|---|
| CN | 115118402 | A | 27 September 2022 | WO | 2022194263 | A1 | 22 September 2022 |
| CN | 115134844 | A | 30 September 2022 | WO | 2022199183 | A1 | 29 September 2022 |
| CN | 115696371 | A | 03 February 2023 | WO | 2023001270 | A1 | 26 January 2023 |
| CN | 115765942 | A | 07 March 2023 | WO | 2023030291 | A1 | 09 March 2023 |
| US | 2023014777 | A1 | 19 January 2023 | WO | 2021185163 | A1 | 23 September 2021 |
| | | | | CN | 113498170 | A | 12 October 2021 |

Form PCT/ISA/210 (patent family annex) (July 2022)